# EUROPEAN PATENT SPECIFICATION

(11) **EP 0 704 560 B1**
(45) Date of publication and mention of the grant of the patent: **13.01.1999**
(21) Application number: 95810593.4
(22) Date of filing: 21.09.1995
(51) Int. Cl.: D01F 1/10, D01F 1/04, C08K 5/00

(54) **Stabilization of pigmented fiber with a synergistic mixture of hindered amine and UV absorber**
Stabilisierung von pigmentierten Fasern mit einer synergistischen Mischung von UV-Absorber und gehindertem Amin
Stabilisation de fibres pigmentées par un mélange synergique d'absorbeurs d'UV et d'amine stériquement encombrée

(30) Priority: 30.09.1994 US 316312
(43) Date of publication of application: 03.04.1996
(73) Proprietor: Ciba Specialty Chemicals Holding Inc., 4057 Basel (CH)
(72) Inventor: Solera, Peter, Suffern, NY 10901 (US); Reinicker, Roger, Wellington South, Hockessin, DE 19707 (US); Bäbler, Fridolin, Dr., Hockessin, DE 19707 (US); Horsey, Douglas William, Briarcliff Manor, NY 10510 (US); Puglisi, Joseph Steven, Crompond, NY 10517 (US); Schumann, Kenneth, Dunwoody, GA 30338 (US); Suhadolnik, Joseph, Yorktown Heights, NY 10598 (US)

(56) References cited:
- EP-A- 0 180 992
- EP-A- 0 299 426
- EP-A- 0 483 488
- EP-A- 0 501 239
- EP-A- 0 505 775
- US-A- 4 467 061
- US-A- 5 244 947
- DATABASE WPI Section Ch, Week 7552 Derwent Publications Ltd., London, GB; Class A60, AN 75-85291W & JP-A-50 058 141 ( SANKYO KK) , 20 May 1975

## Description

Pigmented thermoplastic fiber, especially pigmented polypropylene fiber, are stabilized against the deleterious effects of actinic radiation by a synergistic combination of a hindered amine light stabilizer plus a UV absorber such as an o-hydroxyphenylbenzotriazole or an o-hydroxyphenyl-s-triazine.

This unexpected result is quite surprising in light of the known lack of effectiveness of UV absorbers when distributed throughout polymeric materials which are less than 50 microns thick and/or when in the presence of a wide variety of different pigment types.

### Background of the Invention

The deleterious effects of actinic light on the aging of thermoplastics is a long-recognized problem which has attracted a great deal of commercial activity. One well-known method for stabilizing polymer systems is by the addition of UV absorbers such as o-hydroxyphenylbenzotriazoles or o-hydroxyphenyl-s-triazines which protect the polymer by preferentially absorbing incident UV radiation. Another well-known approach involves the addition of various hindered amine light stabilizers (HALS) which limit polymer degradation by terminating various photo-induced oxidation chain reactions. In certain polymer systems, the combination of these two types of stabilizers has proven particularly effective.

The stabilization of thermoplastic fiber against photo-induced degradation presents special difficulties. This is primarily due to the thinness of the fiber which, within the context of the instant invention, is less than 50 microns thick, frequently much less than 50 microns thick. Since this small cross section provides only a very short distance for light to travel before passing through a fiber, the stabilization effect of conventional concentrations of UV absorbers dispersed throughout the body of the fiber is expected to be minimal as demonstrated by Carlsson and Wiles in accordance with Beer's Law of Absorptivity [J. Macromol. Sci., Rev. Macromol. Chem. C14(2), 155 (1976)]. The high surface area of the fiber also makes it particularly sensitive to surface oxidation further limiting the effectiveness of UV absorbers.

The problems associated with UV absorbers in thin sections can be obviated somewhat by concentrating the UV absorber on the surface of the material and effectively blocking UV light from penetrating into the polymer. United States Patent Nos. 4,895,981 and 4,964,871 disclose fibers which are surface treated with UV absorbers in dye bath applications.

Due to the limited value of UV absorbers in stabilized thin sections, hindered amines (HALS) have assumed an important role in UV stabilization of fiber, being dominant in the stabilization of polypropylene fiber [Wishman, Stabilization of Polypropylene Fiber, 7th International Conf., Advances in the Stabilization and Controlled Degradation of Polymers, 1985]. However, the presence of pigments greatly complicates the stabilization issue. Not only do pigments themselves demonstrate differing degrees of lightfastness in polymer compositions, but pigments can also act as stabilizers or prodegradants. Furthermore, some pigments are known to interact with other additives, sometimes favorably, sometimes unfavorably, but these interactions are poorly understood and cannot currently be predicted [P. P. Klemchuk, Polymer Photochemistry 3, 1 (1983)].

A frequently cited example of the complexities of pigment additive interactions is found in the above-cited Wishman reference. In polypropylene fiber, the pigment Red 144 is a stabilizer when used with nickel stabilizers, but is a prodegradant in the presence of the hindered amine bis(2,2,6,6-tetramethylpiperidin-4-yl) sebacate, TINUVIN® 770 (Ciba-Geigy). Pigment Red 144 behaves well with another unspecified HALS stabilizer. Pigment Yellow 93 acts as a stabilizer in otherwise non-stabilized systems, is neutral with nickel stabilizers, but is a prodegradant with TINUVIN® 770.

For many pigmented fibers, HALS also does not provide the light stabilization required for current commercial applications. United States Patent No. 5,190,710 teaches a "synergistic" mixture of a HALS and a 3,5-di-tert-butyl-4-hydroxybenzoate (3,5-DHBZ) for the stabilization of pigmented polyolefin thin film or fiber. Due to the complex nature of pigment interactions, an improvement in colorfastness and physical property retention is seen for phthalocyanine blue, phthalocyanine green and azo red pigments, but not for azo orange or azo yellow pigments. United States Patent No. 5,223,339 discloses compounds which contain both HALS and 3,5-DHBZ moieties useful in stabilizing azo red pigmented polypropylene fibers.

Although the use of HALS and UV absorber in combination is known as taught in United States Patent Nos. 4,314,933; 4,619,956 and 5,221,287, there is no teaching showing the benefit of such a combination in a pigmented fiber.

Although the polyamide fibers of United States Patent No. 5,221,287 are stabilized in some instances by a combination of HALS and UV absorbers, this patent specifically teaches the surface treatment of prespun fibers which concentrates the stabilizers at the surface. Again, this is quite different from the instant invention which provides for modest concentrations of HALS and UV absorber dispersed throughout the fiber. Also, this reference does not disclose any synergy arising from the combination of HALS and UV absorber, but rather demonstrates no more than a marginal effect expected by the simple addition of one stabilizer system with another.

United States Patent No. 4,314,933 describes the use of a combination of hindered amines with UV absorbers such as benzophenones, oxanilides, benzotriazoles, acrylic acid derivatives and organic nickel compounds in two-layer coatings systems based on acrylic acid, alkyd or polyester thermoset resins. These coatings systems not only represent a different polymer substrate than the instant invention, but produce a lacquer which is a minimum of 65-70 microns thick.

Japanese Sho 50-58141 teaches a method of stabilization of synthetic polymers containing an organic pigment which further contains a hindered amine in combination with a UV absorber. A wide variety of organic pigments, selected hindered amines and selected UV absorbers are disclosed including the synergistic combination of the hindered amine and UV absorber even in the presence of an organic pigment. Polypropylene films and sheets are described as substrates, but there is no mention or suggestion of polypropylene fibers in this reference.

United States Patent No. 4,619,956 provides a synergistic combination of a generic HALS with an o-hydroxyphenyl-s-triazine UV absorber. The patent teaches the use of said combination in a wide variety of resins which form films or coatings and from which molded articles can be made. The preferred substrates are acid catalyzed thermoset acrylic or alkyd resins. These coating systems represent a different polymer technology from thermoplastic fiber and the lacquers of this patent are 2 mils (50 microns) thick. Fibers are not mentioned or suggested by this patent. United States Patent Nos. 4,314,933 and 4,619,956 are not applicable to fiber technology since the very thin nature of fibers, much thinner than the coatings of said patents, and the high surface areas of said fibers are exposed to oxidation which severely limit the applicability of UV absorbers.

This position is consistent with the data presented in United States Patent No. 5,190,710 for unpigmented polypropylene which states that a combination of a low level of piperidyl derived HALS, about 0.3% or less in combination with a low level of UV absorber, about 0.3% or less would provide no more than a marginally greater stabilization than the HALS itself with a 50 micron zone. There is nothing to lead one skilled in the art to believe that the presence of a pigment in the fiber would greatly change this expectation.

Accordingly, it is quite surprising that the incorporation of a small to modest concentration of UV absorber along with a HALS into a pigmented fiber produces a significant increase in the photostability of the subsequent fiber composition. This increased photostability can be measured both by color retention and maintenance of physical properties such as tensile strength. As shown in the working Examples, this increase in photostability is truly synergistic as a given total concentration of HALS and UV absorber significantly outperforms that total concentration of HALS alone. This impressive increase seen with the instant stabilizer combinations is all the more surprising since UV absorbers alone impart almost no stability to the same pigmented fiber.

Equally surprising is the general applicability of the instant stabilizer combination as it pertains to a wide variety of pigment types. As mentioned above, pigment interactions are complex and unpredictable. For example, United States Patent No. 5,190,710 describes a method which stabilizes azo red pigmented systems, but not azo orange or azo yellow systems. By contrast, the instant method stabilizes each of these systems and is widely applicable to a variety of pigment types.

### Detailed Disclosure

The instant invention pertains to a pigmented thermoplastic polymer fiber stabilized by an effective amount of a synergistic combination of a UV absorber and a hindered amine, wherein the UV absorber is selected from the compounds
2-[2-hydroxy-5'-methylphenyl]-2H-benzotriazole;
2-[2-hydroxy-3',5'-di-tert-butylphenyl]-2H-benzotriazole;
2-[2-hydroxy-5'-tert-butylphenyl]-2H-benzotriazole;
2-[2-hydroxy-5'-(1,1,3,3-tetramethylbutyl)phenyl]-2H-benzotriazole;
2-[2-hydroxy-5-chloro-3',5'-di-tert-butylphenyl]-2H-benzotriazole;
2-[2-hydroxy-5-chloro-3'-tert-butyl-5 '-methylphenyl]-2H-benzotriazole;
2-[2-hydroxy-3'-sec-butyl-5'-tert-butylphenyl]-2H-benzotriazole;
2-[2-hydroxy-4'-octoxyphenyl]-2H-benzotriazole;
2-[2-hydroxy-3,5'-di-tert-amylphenyl]-2H-benzotriazole;
2-[2-hydroxy-3'-tert-butyl-5'-(2-(omega-hydroxy-octa-(ethyleneoxy)carbonylethyl)phenyl]-2H-benzotriazole;
2-[2-hydroxy-3'-dodecyl-5'-methylphenyl]-2H-benzotriazole;
2-[2-hydroxy-3'-tert-butyl-5 '-(2-octyloxycarbonyl)ethylphenyl]-2H-benzotriazole;
2-[2-hydroxy-3'-dodecyl-5'-methylphenyl]-2H-benzotriazole;
2- {2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2,6-bis-(2,4-dimethylphenyl)-4-(2,4-dihydroxyphenyl)-s-triazine;
2,4-bis(2,4-dihydroxyphenyl)-6-(4-chlorophenyl)-s-triazine;
2,4-bis[2-hydroxy-4-(2-hydroxyethoxy)phenyl]-6-(4-chlorophenyl)-s-triazine;
2,4-bis[2-hydroxy-4-(2-hydroxy-4-(2-hydroxyethoxy)phenyl]-6-(2,4-dimethylphenyl)-s-triazine;
2,4-bis[2-hydroxy-4-(2-hydroxyethoxy)phenyl]-6-(4-bromophenyl)-s-triazine;
2,4-bis[2-hydroxy-4-(2-acetoxyethoxy)phenyl]-6-(4-chlorophenyl)-s-triazine;
2,4-bis(2,4-dihydroxyphenyl)-6-(2,4-dimethylphenyl)-s-triazine; or
2-hydroxy-4-dodecyloxybenzophenone; or
2-hydroxy-4-octyloxy-benzophenone.

Particularly, the invention pertains to a fiber wherein the thermoplastic polymer is a polyolefin, a polyamide or a polyester, especially wherein the polymer is polypropylene, polyamide or polyester. Most preferred is polypropylene.

More particularly, the fiber is made from any thermoplastic polymer which is suitable for spinning into fiber. Said fiber can be made from a polyolefin, a polyamide or a polyester, such as polypropylene, polycaprolactam (nylon 6), poly(hexamethylene adipamide) (nylon 66), poly(ethylene terephthalate) PET or PET copolymers with polyethylene glycols or modified carboxylic acids such as naphthylene dicarboxylate.

More particularly, the hindered amines are those derived from 2,2,6,6-tetramethylpiperidines although any hindered amine where the α-carbons adjacent to the N-atom are completely substituted are useful in this invention.

The effective amount of the combination of stabilizers of this invention are 0.25 to 6%; preferably 0.3 to 3%; and most preferably 0.5 to 2.5% by weight, based on the thermoplastic fiber. The effective amount of the hindered amine is 0.05% to 5%; preferably 0.1% to 2.5%; most preferably 0.2 to 1.5% by weight, based on the thermoplastic fiber. The effective amount of the UV absorber is from 0.05 to 5%; preferably 0.1 to 3%; most preferably 0.3 to 1.5% by weight, based on the thermoplastic fiber.

Most particularly, the UV absorbers are
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2-hydroxy-4-dodecyloxybenzophenone; and
2-hydroxy-4-octyloxy-benzophenone.

Preferably the UV absorber is a benzotriazole or an s-triazine.

Most preferably, the hindered amines are
the polycondensation product of 1-(2-hydroxyethyl)-2,2,6,6-tetramethyl-4-hydroxypiperidine and succinic acid;
the polycondensation product of 4,4'-hexamethylene-bis(amino-2,2,6,6-tetramethylpiperidine) and 2,4-dichloro-6-tert-octylamino-s-triazine;
the polvcondensation product of 4,4'-hexamethylene-his(amino-2,2,6,6-tetramethylpiperidine) and 2,4-dichloro-6-morpholino-s-triazine;
poly[methyl 3-(2,2,6,6-tetramethylpiperidin-4-yloxy)propyl]siloxane;
bis(2,2,6,6-tetramethylpiperidin-4-yl) cyclohexylenedioxydimethylmalonate;
1,3,5-tris{N-cyclohexyl-N-[2-(2,2,6,6-tetramethylpiperazin-3-on-4-yl)ethyl]amino-s-triazine;
N,N',N",N'"-tetrakis[4,6-bis(butyl-(2,2,6,6-tetramethylpiperidin-4-yl)amino)-s-triazin-2-yl]-1,10-diamino-4,7-diazadecane; and
2,2,6,6-tetramethylpiperidin-4-yl C₁₆-C₂₀alkanoate.

Most especially, the UV absorber is
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-henzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine; or
2-(2-hydroxy-3-α-cumyl-5-tert-octylphenyl)-2H-benzotriazole; and
the hindered amine is
the polycondensation product of 1-(2-hydroxyethyl)-2,2,6,6-tetramethyl-4-hydroxypiperidine and succinic acid;
the polycondensation product of 4,4'-hexamethylene-bis(amino-2,2,6,6-tetramethylpiperidine) and 2,4-dichloro-6-tert-octylamino-s-triazine;
the polycondensation product of 4,4'-hexamethylene-bis(amino-2,2,6,6-tetramethylpiperidine) and 2,4-dichloro-6-morpholino-s-triazine; or
N,N',N",N'"-tetrakis[4,6-bis(butyl-(2,2,6,6-tetramethylpiperidin-4-yl)amino)-s-triazin-2-yl]-1,10-diamino-4,7-diazadecane.

The fibers of the instant invention are made from the thermoplastic polymer in a standard or conventional manner, for example, using melt spinning, solution (dry) spinning or fibrillation of thin films. The individual filaments are typically about 50 microns or less. These can be joined into multifilament yarns of higher denier. The ultimate article prepared can have individual yarns of different polymers if desired.

Additionally, the instant invention also pertains to a stabilized pigment composition which comprises
(a) an organic or inorganic pigment, and
(b) an effective stabilizing amount of a mixture of
   (i) a hindered amine, and
   (ii) a UV absorber, wherein the UV absorber is as described above for the pigmented and stabilized fibers of this invention.

Preferred components (a), (bi) and (bii) are basically as described above for the pigmented and stabilized fibers of this invention.

Preferably, the UV absorber is a benzotriazole or an s-triazine.

The hindered amine is preferably derived from a 2,2,6,6-tetramethylpiperidine.

The stabilized pigment composition is where the effective amount of a combination of stabilizers of this invention is 10 to 50% by weight, based on the pigment; where the effective amount of hindered amine is 1 to 49% by weight, based on the pigment; and where the effective amount of the UV absorber is 1 to 49% by weight, based on the pigment.

Preferably, the UV absorber in the stabilized pigment composition is
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2-hydroxy-4-dodecyloxybenzophenone; or
2-hydroxy-4-octyloxy-benzophenone.

Preferably, the hindered amine in the stabilized pigment composition is
the polycondensation product of 1-(2-hydroxyethyl)-2,2,6,6-tetramethyl-4-hydroxypiperidine and succinic acid;
the polycondensation product of 4,4'-hexamethylene-bis(amino-2,2,6,6-tetramethylpiperidine) and 2,4-dichloro-6-tert-octylamino-s-triazine;
the polycondensation product of 4,4'-hexamethylene-bis(amino-2,2,6,6-tetramethylpiperidine) and 2,4-dichloro-6-morpholino-s-triazine;
poly[methyl 3-(2,2,6,6-tetramethylpiperidin-4-yloxy)propyl]siloxane;
bis(2,2,6,6-tetramethylpiperidin-4-yl) cyclohexylenedioxydimethylmalonate;
1,3,5-tris{N-cyclohexyl-N-[2-(2,2,6,6-tetramethylpiperazin-3-on-4-yl)ethyl]amino-s-triazine;
N,N',N",N'"-tetrakis[4,6- bis(butyl-(2,2,6,6-tetramethylpiperidin-4-yl)amino)-s-triazin-2-yl]-1,10-diamino-4,7-diazadecane; or
2,2,6,6-tetramethylpiperidin-4-yl C₁₆-C₂₀alkanoate.

Most especially, the UV absorber is
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine; or
2-(2-hydroxy-3-a-cumyl-5-tert-octylphenyl)-2H-benzotriazole; and
the hindered amine is
the polycondensation product of 1-(2-hydroxyethyl)-2,2,6,6-tetramethyl-4-hydroxypiperidine and succinic acid;
the polycondensation product of 4,4'-hexamethylene-bis(amino-2,2,6,6-tetramethylpiperidine) and 2,4-dichloro-6-tert-octylamino-s-triazine;
the polycondensation product of 4,4'-hexamethylene-bis(amino-2,2,6,6-tetramethylpiperidine) and 2,4-dichloro-6-morpholino-s-triazine; or
N,N',N",N'"-tetrakis[4,6-bis(butyl-(2,2,6,6-tetramethylpiperidin-4- yl)amino)-s-triazin-2-yl]-1,10-diamino-4,7-diazadecane.

Preferably, the pigment in the stabilized pigment composition is the pigment selected from the pigment class which is an azo, azomethine, methine, anthraquinone, phthalocyanine, perinone, perylene, dioxazine, diaryldiketopyrrolopyrrole, thioindigo, iminoisoindoline, iminoisoindolinone, quinacridone, quinacridonequinone, flavanthrone, indanthrone, anthrapyrimidine and quinophthalone pigment, and also the metal complexes of azo, azomethine and methine pigment.

Most preferably, the pigment in the stabilized pigment composition is the pigment selected from the phthalocyanines, anthraquinones, perylenes, diaryldiketopyrrolopyrroles, iminoisoindolinones, quinacridones, indanthrones, monoazo, disazo and azomethines pigments.

Another preferred pigment in the stabilized pigment composition is inorganic and is selected from the metal oxides, antimony yellow, lead chromate, lead chromate sulfate, lead molybdate, ultramarine blue, cobalt blue, manganese blue, chrome oxide green, hydrated chrome oxide green, cobalt green, and also metal sulfides, cadmium sulfoselenide, zinc ferrite, cadmium-mercury sulfide, bismuth vanadate and mixed metal oxides (MMO).

Most preferably, the inorganic pigment in the stabilized pigment composition is selected from the lead chromates, lead chromate sulfates, lead molybdates and iron oxides.

The stabilizers of the instant invention may readily be incorporated into the organic polymers by conventional techniques, at any convenient stage prior to the manufacture of shaped articles therefrom. For example, the stabilizer may be mixed with the polymer in dry powder form, or a suspension or emulsion of the stabilizer may be mixed with a solution, suspension, or emulsion of the polymer. The resulting stabilized polymer compositions of the invention may optionally also contain from 0.01 to 5%, preferably from 0.025 to 2%, and especially from 0.1 to 1% by weight of various conventional additives, such as the materials listed below, or mixtures thereof.

### 1. Antioxidants

### 1.1. Alkylated monophenols, for example,

2,6-di-tert-butyl-4-methylphenol
2-tert.butyl-4,6-dimethylphenol
2,6-di-tert-butyl-4-ethylphenol
2,6-di-tert-butyl-4-n-butylphenol
2,6-di-tert-butyl-4-i-butylphenol
2,6-di-cyclopentyl-4-methylphenol
2-(α-methylcyclohexyl)-4,6-dimethylphenol
2,6-di-octadecyl-4-methylphenol
2,4,6-tri-cyclohexylphenol
2,6-di-tert-butyl-4-methoxymethylphenol

### 1.2. Alkylated hydroquinones, for example,

2,6-di-tert-butyl-4-methoxyphenol
2,5-di-tert-butyl-hydroquinone
2,5-di-tert-amyl-hydroquinone
2,6-diphenyl-4-octadecyloxyphenol

### 1.3. Hydroxylated thiodiphenyl ethers, for example,

2,2'-thio-bis-(6-tert-butyl-4-methylphenol)
2,2'-thio-bis-(4-octylphenol)
4,4'-thio-bis-(6-tert-butyl-3-methylphenol)
4,4'-thio-bis-(6-tert-butyl-2-methylphenol)

### 1.4. Alkylidene-bisphenols, for example,

2,2'-methylene-bis-(6-tert-butyl-4-methylphenol)
2,2'-methylene-bis-(6-tert-butyl-4-ethylphenol)
2,2'-methylene-bis-[4-methyl-6-(α-methylcyclohexyl)-phenol]
2,2'-methylene-bis-(4-methyl-6-cyclohexylphenol)
2,2'-methylene-bis-(6-nonyl-4-methylphenol)
2,2'-methylene-bis-[6-(α-methylbenzyl)-4-nonylphenol]
2,2'-methylene-bis-[6-(α,α-dimethylbenzyl)-4-nonylphenol]
2,2'-methylene-bis-(4,6-di-tert-butylphenol)
2,2'-ethylidene-bis-(4,6-di-tert-butylphenol)
2,2'-ethylidene-bis-(6-tert-butyl-4-isobutylphenol)
4,4,-methylene-bis-(2,6-di-tert-butylphenol)
4,4'-methylene-bis-(6-tert-butyl-2-methylphenol)
1,1-bis-(5-tert-butyl-4-hydroxy-2-methylphenyl-butane
2,6-di-(3-tert-butyl-5-methyl-2-hydroxybenzyl)-4-methylphenol
1,1,3-tris-(5-tert-butyl-4-hydroxy-2-methylphenyl)-butane
1,1--bis-(5-tert-butyl-4-hydroxy-2-methylphenyl)-3-n-dodecylmercaptobutane
ethyleneglycol bis-[3,3-bis-(3'-tert-butyl-4'-hydroxyphenyl)-butyrate]
di-(3-tert-butyl-4-hydroxy-5-methylphenyl)-dicyclopentadiene
di-[2-(3'-tert-butyl-2'-hydroxy-5'-methyl-benzyl)-6-tert-butyl-4-methylphenyl] terephthalate.

### 1.5. Benzyl compounds, for example,

1,3,5-tri-(3,5-di-tert-butyl-4-hydroxybenzyl)-2,4,6-trimethylbenzene
di-(3,5-di-tert-butyl-4-hydroxybenzyl) sulfide
3,5-di-tert-butyl-4-hydroxybenzyl-mercapto-acetic acid isooctyl ester
bis-(4-tert-butyl-3-hydroxy-2,6-dimethylbenzyl)dithiol terephthalate
1,3,5-tris-(3,5-di-tert-butyl-4-hydroxybenzyl) isocyanurate
1,3,5-tris-(4-tert-butyl-3-hydroxy-2,6-dimethylbenzyl) isocyanurate
3,5-di-tert-butyl-4-hydroxybenzyl-phosphoric acid dioctadecyl ester
3,5-di-tert-butyl-4-hydroxybenzyl-phosphoric acid monoethyl ester, calcium-salt

### 1.6. Acylaminophenols, for example,

4-hydroxy-lauric acid anilide
4-hydroxy-stearic acid anilide
2,4-bis-octylmercapto-6-(3,5-tert-butyl-4-hydroxyanilino)-s-triazine
octyl-N-(3,5-di-tert-butyl-4-hydroxyphenyl)-carbamate

### 1.7. Esters of β-(3,5-di-tert-butyl-4-hydroxyphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |

### 1.8. Esters of β-(5-tert-butyl-4-hydroxy-3-methylphenyl)-propionic acid with monohydric or polyhydric alcohols, for example,

| | |
|---|---|
| methanol | diethylene glycol |
| octadecanol | triethylene glycol |
| 1,6-hexanediol | pentaerythritol |
| neopentyl glycol | tris-hydroxyethyl isocyanurate |
| thiodiethylene glycol | di-hydroxyethyl oxalic acid diamide |

### 1.9. Amides of β-(3,5-di-tert-butyl-4-hydroxyphenyl)-propionic acid for example,

N,N'-di-(3,5-di-tert-butyl-4-hydroxyphenylpropionyl)-hexamethylenediamine
N,N'-di-(3,5-di-tert-butyl-4-hydroxyphenylpropionyl)-trimethylenediamine
N,N'-di-(3,5-di-tert-butyl-4-hydroxyphenylpropionyl)-hydrazine

### 1.10 Diarylamines, for example,

diphenylamine, N-phenyl- l-naphthylamine, N-(4-tert-octylphenyl)- 1-naphthylamine,
4,4'-di-tert-octyl-diphenylamine, reaction product of N-phenylbenzylamine and
2,4,4-trimethylpentene, reaction product of diphenylamine and 2,4,4-trimethylpentene, reaction product of N-phenyl-1-naphthylamine and 2,4,4-trimethylpentene.

### 2. UV absorbers and light stabilizers

2.1. 2-(2'-Hydroxyphenyl)-benzotriazoles, for example, the 5'-methyl-, 3',5'-di-tert-butyl-, 5'-tert-butyl-, 5'-(1,1,3,3-tetramethylbutyl)-, 5-chloro-3',5'-di-tert-butyl-, 5-chloro-3'-tert-butyl-5'-methyl-, 3'-sec-butyl-5'-tert-butyl-, 4'-octoxy, 3',5'-di-tert-amyl-, 3',5'-bis-(α,α-dimethylbenzyl), 3'-tert-butyl-5'-(2-(omega-hydroxy-octa-(ethyleneoxy)carbonyl-ethyl)-, 3'-dodecyl-5'-methyl-, and 3'-tert-butyl-5'-(2-octyloxycarbonyl)ethyl-, and dodecylated-5'-methyl derivatives.

2.2. 2-Hydroxy-benzophenones, for example, the 4-hydroxy-, 4-methoxy-, 4-octoxy, 4-decyloxy-, 4-dodecyloxy-, 4-benzyloxy, 4,2',4'-trihydroxy- and 2'-hydroxy-4,4'-dimethoxy derivatives.

2.3. Esters of optionally substituted benzoic acids for example, phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester and 3,5-di-tert-butyl-4-hydroxybenzoic acid hexadecyl ester.

2.4. Acrylates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, a-carbomethoxy-p-methoxy-cinnamic acid methyl ester, N -(β-carbomethoxy-β-cyanovinyl)-2-methyl-indoline.

2.5. Nickel compounds, for example, nickel complexes of 2,2'-thio-bis-[4-(1,1,3,3-tetramethylbutyl)-phenol], such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.

2.6. Sterically hindered amines, for example bis-(2,2,6,6-tetramethylpiperidyl) sebacate, bis-(1,2,2,6,6-pentamethylpiperidyl) sebacate, n-butyl-3,5-di-tert.butyl-4-hydroxybenzyl malonic acid bis-(1,2,2,6,6-pentanemethylpiperidyl)ester, condensation product of 1-hydroxyethyl-2,2,6,6-tetramethyl-4-hydroxypiperidine and succinic acid, condensation product of N,N'-(2,2,6,6-tetramethylpiperidyl)-hexamethylenediamine and 4-tert-octylamino-2,6-dichloro-s-triazine, tris-(2,2,6,6-tetramethylpiperidyl)-nitrilotriacetate, tetrakis-(2,2,6,6-tetramethyl-4-piperidyl) 1,2,3,4-butanetetracarboxylate, 1,1'(1,2-ethanediyl)-bis-(3,3,5,5-tetramethylpiperazinone), di-(1-octyloxy-2,2,6,6-tetramethylpiperidin-4-yl) sebacate, di-(1-cyclohexyloxy-2,2,6,6-tetramethylpiperidin-4-yl) succinate, 1-octyloxy-2,2,6,6-tetramethyl-4-hydroxy-piperidine, poly-{[6-tert-octylamino-s-triazin-2,4-diyl][2-(1-cyclohexyloxy-2,2,6,6-tetramethylpiperidin-4-yl)imino-hexamethylene-[4-(1-cyclohexyloxy-2,2,6,6-tetramethylpiperidin-4-yl)imino], 2,4,6-tris[N-(1-cyclohexyloxy-2,2,6,6-tetramethylpiperidin-4-yl)-n-butylamino]-s-triazine. 2.7. Oxalic acid diamides, for example, 4,4'-di-octyloxy-oxanilide, 2,2'-di-octyloxy-5,5'-ditert-butyl-oxanilide, 2,2'-di-dodecyloxy-5,5'-di-tert-butyl-oxanilide, 2-ethoxy-2'-ethyl-oxanilide, N,N'-bis (3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of ortho- and para-methoxy- as well as of o- and p-ethoxy-disubstituted oxanilides.

2.8. Hydroxyphenyl-s-triazines, for example2,6-bis-(2,4-dimethylphenyl)-4-(2-hydroxy-4-octyloxyphenyl)-s-triazine; 2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine; 2,4-bis[2-hydroxy-4-(2-hydroxyethoxy)phenyl]-6-(4-chlorophenyl)-s-triazine; 2,4-bis[2-hydroxy-4-(2-hydroxy-4-(2-hydroxyethoxy)phenyl]-6-(2,4-dimethylphenyl)-s-triazine; 2,4-bis[2-hydroxy-4-(2-hydroxyethoxy)-phenyl]-6-(4-bromophenyl)-s-triazine; 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine.

3. Metal deactivators, for example, N,N'-diphenyloxalic acid diamide, N-salicylal-N'-salicyloylhydrazine, N,N'-bis-salicyloylhydrazine, N,N'-bis-(3,5-di-tert-butyl-4-hydroxyphenylpropionyl)-hydrazine, 3-salicyloylamino-1,2,4-triazole, bis-benzylidene-oxalic acid dihydrazide.

4. Phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecyl-pentaerythritol diphosphite, di-(2,4-di-tert-butylphenyl)pentaerythritol diphosphite, tristearyl-sorbitol triphosphite, tetrakis-(2,4-di-tert-butylphenyl) 4,4'-diphenylylenediphosphonite.

5. Compounds which destroy peroxide, for example, esters of β-thiodipropionic acid, for example the lauryl, stearyl, myristyl or tridecyl esters, mercapto-benzimidazole or the zinc salt of 2-mercaptobenzimidazole, zinc dibutyl-dithiocarbamate, dioctadecyl disulfide, pentaerythritol tetrakis-(β-dodecylmercapto)-propionate.

6. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

7. Nitrones, for example, N-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-pentadecyl nitrone, N-octadecyl-alpha-heptadecylnitrone, N-hexadecyl-alpha-heptadecyl nitrone, N-octadecyl-alpha-pentadecyl nitrone, N-heptadecyl-alpha-heptadecyl nitrone, N-octadecyl-alpha-hexadecyl nitrone, nitrone derived from N,N-dialkylhydroxylamine derived from hydrogenated tallow amine.

8. Polyamide stabilizers, for example copper salts in combination with iodides and/or phosphorus compounds and salts of divalent manganese.

9. Basic co-stabilizers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

10. Nucleating agents, for example, 4-tert-butyl-benzoic acid, adipic acid, diphenylacetic acid.

11. Fillers and reinforcing agents, for example, calcium carbonate, silicates, glass fibers, asbestos, talc, kaolin, mica, barium sulfate, metal oxides and hydroxides, carbon black, graphite.

12. Other additives, for example, plasticizers, lubricants, emulsifiers, pigments, optical brighteners, flameproofing agents, anti-static agents, blowing agents and thiosynergists such as dilauryl thiodipropionate or distearyl thiodipropionate.

The thermoplastic fiber can be pigmented with either organic or inorganic pigments. Examples of the useful classes of organic pigments are the azo, azomethine, methine, anthraquinone, phthalocyanine, perinone, perylene, dioxazine, diaryldiketopyrrolopyrrole, thioindigo, iminoisoindoline, iminoisoindolinone, quinacridone, quinacridonequinone, flavanthrone, indanthrone, anthrapyrimidine and quinophthalone pigments, and also the metal complexes of azo, azomethine and methine pigments. Pigments having good heat resistance are especially suitable.

Preferred organic pigments are the phthalocyanines, anthraquinones, perylenes, diaryldiketopyrrolopyrroles, iminoisoindolinones, iminoisoindolines, quinacridones, indanthrones, monoazo, disazo and azomethines pigments.

Examples of useful inorganic pigments are the metal oxides such as iron oxide, antimony yellow, lead chromate, lead chromate sulfate, lead molybdate, ultramarine blue, cobalt blue, manganese blue, chrome oxide green, hydrated chrome oxide green, cobalt green, and also metal sulfides such as cadmium sulfide, cerium sulfide, zinc sulfide, antimony trisulfide, cadmium sulfoselenide, zinc ferrite, cadmium-mercury sulfide, bismuth vanadate and mixed metal oxides (MMO).

Preferred inorganic pigments are the lead chromates, lead chromate sulfates, lead molybdates and iron oxides.

Some pigment derivatives or colorants are soluble in the thermoplastic polymer, particularly nylon or polyester. These pigments include derivatives of the anthraquinones, 1:2 chrome complexes, perinones, phthalocyanines, perylenes, polycyclics, pyrazolones, quinophthalones, monoazos, pyridones, polymethines, coumarins, quinolines, disazos, azos and thioindigos.

Most preferred are the organic pigments.

As mentioned above, the additives including stabilizers, pigments and/or stabilized pigment compositions are introduced into the thermoplastic polymer using conventional methods. This can occur during the fiber spinning process or in a prior compounding step such as compound extrusion. Incorporation of pigments/hindered amine/UV absorbers into the thermoplastic material can be accomplished by coating or mixing granules or powder of the thermoplastic polymer with the finely divided dry pigment powder and stabilizers or by treating the granules or powder particles with a solution or dispersion of the pigment and the two stabilizers in a polymer, in a polymer blend, in an organic solvent, in water and subsequently removing the solvent. The now stabilized thermoplastic polymer can be transformed into fibers by known conventional methods.

Dispersion of pigments in polymers or polymer blends are well known as color concentrates. These contain 10-80% by weight of pigment in a variety of polymers and are offered commercially by pigment dispersion houses. Ideally, the pigment, hindered amine and UV absorber according to this invention are compounded into a carrier resin using such equipment as single-screw or twin-screw extruders, batch or continuous Banbury mixers or two-roll compounding mills.

In another method, the pigment, hindered amine and UV absorber are incorporated into a carrier resin by flushing techniques known in the art using high speed mixers such as HENSCHEL-mixers or sigma-blend mixers.

The HALS and UV absorber stabilizers of this invention can also be preblended together with the pigment prior to the coating of the thermoplastic resin or compounding with a carrier resin. Further, it is possible to add the HALS and UV absorber directly at the end-step of the pigment synthesis or in a specially prepared aqueous pigment dispersion with or without texture improving agents and isolating the pigment additive mixture by filtration, drying and pulverizing.

Surprisingly, it is found that by comilling without or preferably in the presence of a texture improving agent, a mixture of 60-90 parts by weight of pigment with 10-40 parts by weight of UV absorber and/or hindered amine provides excellent coloristic and stabilization results. Although various milling methods can be considered, in a preferred method, an aqueous pigment suspension, preferably a pigment crude, is comilled with the UV-absorber and/or hindered amine in a vertical or horizontal ball mill, such as DYNO-mill, and following isolation by filtration and drying, yields a homogeneous stabilized pigment composition.

Suitable texture improving agents are, in particular, fatty acids of not less than 18 carbon atoms, for example stearic acid or behenic acid or the amides or metal salts thereof, preferably calcium or magnesium salts, as well as plasticizers, waxes, resin acids such as abietic acid or metal salts thereof, colophonium, alkyl phenols of aliphatic alcohols such as stearyl alcohol or vicinal diols such as dodecane-1,2-diol, and also modified colophonium/maleate resins or colophonium/fumarate resins or polymeric dispersants. The texture improving agents are preferably added in amounts of 0.1 to 30% by weight, most preferably 2 to 15% by weight, based on the final stabilized pigment composition.

It is clear that one specific combination of hindered amine and UV absorber may be more beneficial in some specific fiber applications than in others. For example, while one hindered amine/UV absorber combination provides synergistic stabilization to polypropylene pigmented with diazo pigment Red 144, synergism is not seen when the same combination is used in polypropylene pigmented with isoindolinone pigment Yellow 110. However, when a different hindered amine is substituted in the combination for use in polypropylene pigmented with isoindolinone pigment Yellow 110, synergistic stabilization is again observed.

It is contemplated that more than one hindered amine or more than one UV absorber can be used in a single stabilizer combination within the scope of the instant invention.

Pigmented fibers are frequently dyed to modify the color imparted by the pigment. It is anticipated that fibers of the instant invention can be treated in the same manner, and that further stabilization of the pigmented fiber may occur during this process by the addition of additional hindered amine and/or UV absorber via the dye bath used in the process. It is also anticipated that other conventional modifications of the pigmented fibers may be carried out using the instant fibers.

The following Examples are for illustrative purposes only and are not to be construed to limit the scope of the instant invention in any manner whatsoever.

In the Examples which follow, the polypropylene fiber samples are prepared by extruding fiber grade polypropylene containing a pigment, a phosphite, a phenolic antioxidant or hydroxylamine, a metal stearate, a UV absorber or hindered amine light stabilizer or a combination of a UV absorber and hindered amine light stabilizer. Alternatively, the pigment is mixed with the stabilizers and is then dynomilled to give a stabilized pigment composition. This stabilized pigment composition is then incorporated into polypropylene prior to spinning into fibers.

The pigment is added as a pigment concentrate which is prepared from pure pigment and polypropylene resin (PROFAX® 6301, Himont) by mixing the two components in a high shear mixer in a ratio of 25% pigment and 75% resin, pressing the resulting resin/pigment mixture on a Wabash Compression Molder (Model # 30-1515-4T3) into a thin sheet and then dividing the sheet into fine chips for dispersion in fresh polypropylene resin at reduced concentrations.

All additive and pigment concentrations in the final formulations are expressed as weight percent based on the resin.

The formulations contain 0.05-0.1% phosphite, 0-1.25% phenolic antioxidant, 0-0.1% hydroxylamine, 0.05-0.1% calcium stearate, 0-1.25% UV absorber and/or 0-1.25% hindered amine stabilizer. The materials are dry-blended in a tumble dryer, extruded on a Superior/MPM 1 inch (2.54 cm) single screw extruder or a Brabender PL2000 1.25 inch (3.175 cm) single screw extruder with a general all-purpose screw (24:1 L/D) at 475°F (246°C), cooled in a water bath and pelletized. The resulting pellets are spun into fiber at about 525°F (274°C) on a HILLS Research Fiber Extruder (Model # REM-3P-24) fitted with a 41 hole, delta configuration spinnerette. The spun tow is stretched at a draw ratio of 3.2:1 producing a final denier of 615/41.

The fiber samples are knitted into socks on a Lawson-Hemphill Fiber Analysis Knitter, cut into appropriate lengths and exposed in an Atlas Ci65 Xenon Arc Weather-Ometer at 89°C black panel temperature, 0.55 W/m² at 340 nanometers and 50% relative humidity (Society of Automotive Engineers SAE J 1885 Test Procedure).

Fiber samples are tested by performing color measurements on an Applied Color Systems spectrophotometer by reflectance mode according to ASTM D 2244-79 at approximately 100 hour intervals. Identical, but separate, samples are examined for catastrophic failure approximately every 24 hours.

### Stabilizers, Pigments and Other Additives

UVA 1: 2-{2-hydroxy-3-tert-butyl-5-[2-(methoxycarbonyl)ethyl]phenyl}-2H-benzotriazole;
UVA 2: 2-[2-hydroxy-3,5-di(α,α-dimethylbenzyl)phenyl]-2H-benzotriazole;
UVA 3: 2,4-diphenyl-6-(2-hydroxy-4-hexyloxyphenyl)-s-triazine;
HALS 1: N,N',N", N"'-tetrakis[4,6-bis(butyl-(2,2,6,6-tetramethylpiperidin-4-yl)amino)-s-triazin-2-yl]-1,10-diamino-4,7-diazadecane;
HALS 2: the polycondensation product of 4,4'-hexamethylene-bis(amino-2,2,6,6-tetramethylpiperidine) and 2,4-dichloro-6-tert-octylamino-s-triazine;
PHOS 1: tris(2,4-di-tert-butylphenyl) phosphite;
AO A: tris(3,5-di-tert-butyl-4-hydroxybenzyl) isocyanurate;
HA A: the N,N-dialkylhydroxylamine product made by the direct oxidation of N,N-di(hydrogenated tallow)amine by the process of U.S. Patent No. 5,013,510 or 4,898,901;

| | |
|---|---|
| C.I. Pigment Red 144 | - C.I. No. 20735 (disazo class) |
| C.I. Pigment Yellow 110 | - C.I. No. 56280 (isoindolinone class) |
| C.I. Pigment Yellow 62 | - C.I. No. 13940 (monoazo class) |
| C.I. Pigment Yellow 147 | - C.I. 60645 (anthraquinone class) |
| C.I. Pigment Yellow 95 | - C.I. 20034 (disazo class) |
| C.I. Pigment Violet 19 | - C.I. 73900 (quinacridone class) |

In the Examples which follow, polypropylene fiber samples are generally prepared by the method given above. The polypropylene contains a pigment (identified in each example), 0.05% by weight of calcium stearate, 0.05% of PHOS 1,0.05% of HA A and HALS 1 or HALS 2 alone; UVA 1, UVA 2 or UVA 3 alone: or a synergistic combination of HALS and UVA.

After the polypropylene fibers are exposed to about 1000 KJ/m², the color change (Delta E) which occurs on such exposure is measured. Lower Delta E values indicate better stabilization of the pigmented fiber.

### Example 1

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 1 (1.25%) | - | fiber failure |
| - | HALS 1 (1.25%) | 10.9 |
| UVA 1 (0.5%) | HALS 1 (0.75%) | 5.5 |

The synergistic combination of UVA 1 plus HALS 1 at the same total concentration causes the Delta E value to fall about 50% from the value when the same total concentration of HALS 1 alone is used. UVA 1 does not protect the fiber adequately and fiber failure occurs before 1041 KJ/m² exposure occurs.

### Example 2

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 2 (1.25%) | - | fiber failure |
| - | HALS 1 (1.25%) | 10.9 |
| UVA 2 (0.5%) | HALS 1 (0.75%) | 7.5 |

The synergistic combination of UVA 2 plus HALS 1 at the same total concentration causes the Delta E value to fall about 30% from the value when the same total concentration of HALS 1 alone is used. UVA 2 does not protect the fiber adequately and fiber failure occurs before 1041 KJ/m² exposure occurs.

### Example 3

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 3 (1.25%) | - | fiber failure |
| - | HALS 1 (1.25%) | 10.9 |
| UVA 3 (0.5%) | HALS 1 (0.75%) | 8.2 |

The synergistic combination of UVA 3 plus HALS 1 at the same total concentration causes the Delta E value to fall about 25% from the value when the same total concentration of HALS 1 alone is used. UVA 3 does not protect the fiber adequately and fiber failure occurs before 1041 KJ/m² exposure occurs.

### Example 4

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 1 (1.25%) | - | fiber failure |
| - | HALS 2 (1.25%) | 11.8 |
| UVA 1 (0.5%) | HALS 2 (0.75%) | 7.7 |

The synergistic combination of UVA 1 plus HALS 2 at the same total concentration causes the Delta E value to fall about 35% from the value when the same total concentration of HALS 2 alone is used. UVA 1 does not protect the fiber adequately and fiber failure occurs before 1041 KJ/m² exposure occurs.

### Example 5

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 2 (1.25%) | - | fiber failure |
| - | HALS 2 (1.25%) | 11.8 |
| UVA 2 (0.5%) | HALS 2 (0.75%) | 7.4 |

The synergistic combination of UVA 2 plus HALS 2 at the same total concentration causes the Delta E value to fall about 37% from the value when the same total concentration of HALS 2 alone is used. UVA 2 does not protect the fiber adequately and fiber failure occurs before 1041 KJ/m² exposure occurs.

### Example 6

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 1 (1.20%) | - | fiber failure |
| - | HALS 1 (1.0%) | 10.2 |
| UVA 1 (0.5%) | HALS 1 (0.5%) | 5.9 |

The synergistic combination of UVA 1 plus HALS 1 at the same total concentration causes the Delta E value to fall about 42% from the value when the same total concentration of HALS 1 alone is used. UVA 1 does not protect the fiber adequately and fiber failure occurs before 1041 KJ/m² exposure occurs.

### Example 7

Polypropylene contains standard additives described above and is pigmented with 0.125% of C.I. Pigment Red 144.

| UVA (conc %) | HALS (conc %) | Delta E at 1041 KJ/m² |
|---|---|---|
| UVA 3 (1.0%) | - | fiber failure |
| - | HALS 1 (1.0%) | 10.2 |
| UVA 3 (0.5%) | HALS 1 (0.5%) | 7.3 |

The synergistic combination of UVA 3 plus HALS 1 at the same total concentration causes the Delta E value to fall about 28% from the value when the same total concentration of HALS 1 alone is used. UVA 3 does not protect the fiber adequately and fiber failure occurs before 1041 KJ/m² exposure occurs.

### Example 8

Polypropylene contains standard additives described above and is pigmented with 0.25% of C.I. Pigment Yellow 110.

| UVA (conc %) | HALS (conc %) | Delta E at 1041 KJ/m² |
|---|---|---|
| UVA 1 (1.25%) | - | fiber failure |
| - | HALS 1 (1.25%) | 4.0 |
| UVA 1 (0.5%) | HALS 1 (0.75%) | 2.4 |

The synergistic combination of UVA 1 plus HALS 1 at the same total concentration causes the Delta E value to fall about 42% from the value when the same total concentration of HALS 1 alone is used. UVA 1 does not protect the fiber adequately and fiber failure occurs before 1041 KJ/m² exposure occurs.

### Example 9

Polypropylene contains standard additives described above, but is not pigmented.

| UVA (conc %) | HALS (conc %) | Delta E at 1041 KJ/m² |
|---|---|---|
| UVA 2 (1.25%) | - | fiber failure |
| - | HALS 2 (1.25%) | 0.9 |
| UVA 2 (0.5%) | HALS 2 (0.75%) | 0.6 |

These data show that, when the polypropylene fiber is not pigmented, there is still some synergism observed with the concomitant use of a UV absorber and a hindered amine stabilizer at the same total concentration of stabilizers.

### Example 10

Polypropylene contains standard additives described above and is pigmented with 0.25% of C.I. Pigment Red 144. The data below show that, at three different levels of total stabilizer, the same synergism is observed when a combination of UV absorber plus hindered amine stabilizer are used in pigmented polypropylene fiber.

| UVA (conc %) | HALS (conc %) | Delta E at 1041 KJ/m² |
|---|---|---|
| UVA 2 (1.25%) | - | fiber failure |
| - | HALS 1(1.25%) | 7.4 |
| UVA 2 (0.31%) | HALS 1 (0.94%) | 4.2 |
| UVA 2 (0.625%) | HALS 1 (0.625%) | 4.7 |
| UVA 2 (0.94%) | HALS 1 ().31%) | 4.7 |
| UVA 2 (0.75%) | - | fiber failure |
| | HALS 1 (0.75%) | 6.1 |
| UVA 2 (0.19%) | HALS 1 (0.56%) | 5.3 |
| | | |
| UVA 2 (0.375%) | HALS 1 (0.375%) | 4.2 |
| UVA 2 (0.56%) | HALS 1 (0.19%) | 5.2 |
| UVA 2 (0.25%) | - | fiber failure |
| | HALS 1 (0.25%) | 10.1 |
| UVA 2 (0.06%) | HALS 1 (0.19%) | 9.3 |
| UVA 2 (0.125%) | HALS 1 (0.125%) | 9.5 |
| UVA 2 (0.19%) | HALS 1 (0.06%) | 7.0 |

The synergistic combination of UVA 2 plus HALS 1 at several concentrations causes the Delta E value to fall significantly compared to the values when the same total concentration of HALS 1 alone is used. UVA 2 does not protect the fiber adequately and fiber failure occurs before 1041 KJ/m² exposure occurs.

In the following Examples, polypropylene fibers prepared as described above are knitted into socks and exposed to actinic radiation in the Xenon Arc Weather-Ometer. The exposed socks are tested for catastrophic failure each 24 hours. Failure in this test is determined by the observation of the physical failure of the sock when it is "scratched" with a blunt glass rod. The longer it takes for this catastrophic failure to occur the more effective is the stabilizer system.

As with the synergistic stabilization observed in Examples above, there is a synergistic stabilization occurring when a combination of UV absorber plus hindered amine stabilizer are used in the pigmented polypropylene system. However, unlike the color change data seen in Example 9, synergism also occurs in unpigmented polypropylene fibers in this test procedure.

### Example 11

Polypropylene contains standard additives described above and is pigmented with 0.125% of C.I. Pigment Red 144.

| UVA (conc %) | HALS (conc %) | Days to Failure |
|---|---|---|
| UVA 1 (1.25%) | - | 22 |
| - | HALS 1 (1.25%) | 127 |
| UVA 1 (0.5%) | HALS 1 (0.75%) | 137 |

The synergistic combination of UVA 1 plus HALS 1 at the same total concentration enables the pigmented polypropylene to withstand significantly more UV exposure than the same concentration of HALS 1 is used alone. The UVA 1 fails to protect the fiber adequately and fiber failure occurs after only 22 days.

### Example 12

Polypropylene contains standard additives described above and is pigmented with 0.125% of C.I. Pigment Red 144.

| UVA (conc %) | HALS (conc %) | Days to Failure |
|---|---|---|
| UVA 2 (1.25%) | - | 15 |
| - | HALS 1 (1.25%) | 127 |
| UVA 2 (0.5%) | HALS 1 (0.75%) | 155 |

The synergistic combination of UVA 2 plus HALS 1 at the same total concentration enables the pigmented polypropylene to withstand significantly more UV exposure than the same concentration of HALS 1 is used alone. The UVA 2 fails to protect the fiber adequately and fiber failure occurs after only 15 days.

### Example 13

Polypropylene contains standard additives described above and is pigmented with 0.125% of C.I. Pigment Red 144.

| UVA (conc %) | HALS (conc %) | Days to Failure |
|---|---|---|
| UVA 3 (1.25%) | - | 15 |
| - | HALS 1 (1.25%) | 127 |
| UVA 3 (0.5%) | HALS 1 (0.75%) | 173 |

The synergistic combination of UVA 3 plus HALS 1 at the same total concentration enables the pigmented polypropylene to withstand significantly more UV exposure than the same concentration of HALS 1 is used alone. The UVA 3 fails to protect the fiber adequately and fiber failure occurs after only 15 days.

### Example 14

Polypropylene contains standard additives described above and is pigmented with 0.125% of C.I. Pigment Red 144.

| UVA (conc %) | HALS (conc %) | Days to Failure |
|---|---|---|
| UVA 1 (1.25%) | - | 22 |
| - | HALS 2 (1.25%) | 127 |
| UVA 1 (0.5%) | HALS 2 (0.75%) | 137 |

The synergistic combination of UVA 1 plus HALS 2 at the same total concentration enables the pigmented polypropylene to withstand significantly more UV exposure than the same concentration of HALS 1 is used alone. The UVA 1 fails to protect the fiber adequately and fiber failure occurs after only 22 days.

### Example 15

Polypropylene contains standard additives described above and is pigmented with 0.125% of C.I. Pigment Red 144.

| UVA (conc %) | HALS (conc %) | Days to Failure |
|---|---|---|
| UVA 2 (1.25%) | - | 15 |
| - | HALS 2 (1.25%) | 127 |
| UVA 2 (0.5%) | HALS 2 (0.75%) | 151 |

The synergistic combination of UVA 2 plus HALS 2 at the same total concentration enables the pigmented polypropylene to withstand significantly more UV exposure than the same concentration of HALS 2 is used alone. The UVA 1 fails to protect the fiber adequately and fiber failure occurs after only 15 days.

### Example 16

Polypropylene contains standard additives described above and is pigmented with 0.125% of C.I. Pigment Red 144.

| UVA (conc %) | HALS (conc %) | Days to Failure |
|---|---|---|
| UVA 3 (1.0%) | - | 11 |
| - | HALS 1 (1.0%) | 116 |
| UVA 3 (0.5%) | HALS 1 (0.5%) | 151 |

The synergistic combination of UVA 3 plus HALS 1 at the same total concentration enables the pigmented polypropylene to withstand significantly more UV exposure than the same concentration of HALS 1 is used alone. The UVA 3 fails to protect the fiber adequately and fiber failure occurs after only 11 days.

### Example 17

Polypropylene contains standard additives described above, but is not pigmented.

| UVA (conc %) | HALS (conc %) | Days to Failure |
|---|---|---|
| UVA 2 (1.25%) | - | 19 |
| - | HALS 1 (1.25%) | 111 |
| UVA 2 (0.5%) | HALS 1 (0.75%) | >144 |

The synergistic combination of UVA 2 plus HALS 1 at the same total concentration enables the unpigmented polypropylene to withstand significantly more UV exposure than the same concentration of HALS 1 is used alone. The UVA 2 fails to protect the fiber adequately and fiber failure occurs after only 19 days.

### Example 18

Polypropylene contains standard additives described above and is pigmented with 0.25% of C.I. Pigment Red 144. The data below show that, at three different levels of total stabilizer, the same synergism is observed when a combination of UV absorber plus hindered amine stabilizer are used in pigmented polypropylene fiber.

| UVA (conc %) | HALS (conc %) | Days to Failure |
|---|---|---|
| UVA 2 (1.25%) | - | 10 |
| - | HALS 1 (1.25%) | 122 |
| UVA 2 (0.31%) | HALS 1 (0.94%) | 137 |
| UVA 2 (0.625%) | HALS 1 (0.625%) | 129 |
| UVA 2 (0.94%) | HALS 1 (0.31%) | 91 |
| UVA 2 (0.75%) | - | 9 |
| | HALS 1 (0.75%) | 86 |
| UVA 2 (0.19%) | HALS 1 (0.56%) | 89 |
| UVA 2 (0.375%) | HALS 1 (0.375%) | 87 |
| UVA 2 (0.56%) | HALS 1 (0.19%) | 63 |
| UVA 2 (0.25%) | - | 8 |
| | HALS 1 (0.25%) | 53 |
| UVA 2 (0.06%) | HALS 1 (0.19%) | 59 |
| UVA 2 (0.125%) | HALS 1 (0.125%) | 42 |
| UVA 2 (0.19%) | HALS 1 (0.06%) | 38 |

The synergistic combination of UVA 2 plus HALS 1 at several concentrations causes the days to failure to rise significantly compared to the values when the same total concentration of HALS 1 alone is used. UVA 2 does not protect the fiber adequately when used alone.

In an attempt to ascertain the applicability of using pigmented polypropylene fibers in the interior of automobiles, polypropylene fibers are prepared and tested in a Xenon UV light up to 489.9 KJ/m² exposure and the Delta E values noted.

The polypropylene used in Examples 19-21 is Amoco 7200P. Pigment concentrates are made by aqueous milling techniques in the presence if polyethylene waxes and surfactants. Powder-powder blends of polypropylene, concentrate and stabilizers are then made and used for spinning the stabilized polypropylene fibers. Measurements of Delta E values are made using a Hunterlab Ultrascan.

### Example 19

Polypropylene is pigmented with 0.25% by weight of C.I. Pigment Yellow 62 and stabilized by 0.6% by weight of a hindered amine alone or in combination with 0.5% by weight a UV absorber.

| Stabilizer (conc) | Delta E 165.4 KJ/m² | Delta E 330.8 KJ/m² | Delta E 489.9 KJ/m² |
|---|---|---|---|
| HALS 1 (0.6%) | 3.6 | 5.9 | 9.4 |
| HALS 1 (0.6%) plus UVA 1 (0.5%) | 2.3 | 3.3 | 4.3 |
| HALS 1 (0.6%) plus UVA 2 (0.5%) | 3.4 | 3.9 | 5.0 |

The pigmented fibers containing both a UV absorber and a hindered amine fade only about 50% as fast as those containing hindered amine alone. Additionally, many pigmented fibers containing only hindered amine suffer etching or chalking of the fiber surface during exposure while those containing also UV absorber have greatly reduced chalking.

### Example 20

Polypropylene is pigmented with 0.25% by weight of C.I. Pigment Yellow 147 and stabilized by 0.6% by weight of a hindered amine alone or in combination with 0.5% by weight of a UV absorber.

| Stabilizer (conc) | Delta E 165.4 KJ/m² | Delta E 330.8 KJ/m² | Delta E 489.9 KJ/m² |
|---|---|---|---|
| HALS 1 (0.6%) | 1.9 | 3.5 | 5.6 |
| HALS 1 (0.6%) plus UVA 1 (0.5%) | 1.7 | 2.5 | 3.1 |
| HALS 1 (0.6%) plus UVA 2 (0.5%) | 1.6 | 2.8 | 3.6 |

The pigmented fibers containing both a UV absorber and a hindered amine fade only about 50% as fast as those containing hindered amine alone.

### Example 21

Polypropylene is pigmented with 0.25% by weight of C.I. Pigment Yellow 95 and stabilized by 0.6% by weight of a hindered amine alone or in combination with 0.0833% by weight a UV absorber.

| Stabilizer (conc) | Delta E 165.4 KJ/m² | Delta E 330.8 KJ/m² | Delta E 489.9 KJ/m² |
|---|---|---|---|
| HALS 1 (0.6%) | 4.8 | 11.4 | 16.1 |
| HALS 1 (0.6%) plus UVA 1 (0.0833%) | 3.5 | 7.9 | 11.6 |
| HALS 1 (0.6%) plus UVA 2 (0.0833%) | 3.7 | 8.0 | 11.7 |

The pigmented fibers containing both a UV absorber and a hindered amine fade about a third less than those containing hindered amine alone.

### Example 22

### Stabilized Pigment Composition

In 1200 mL of water is dispersed 165 g of an aqueous pigment presscake containing 71 g of C.I. Pigment Yellow 95 (CROMOPHTAL® Yellow GR, Ciba-Geigy). Then, 3 g of dodecane-1,2-diol and 24 g of 2-{2-hydroxy-3-tert-butyl-5-[2-(methoxycarbonyl)ethyl]-phenyl}-2H-benzotriazole are added. The mixture is dispersed homogeneously in a glass beaker with a stirrer. The pigment additive mixture is thoroughly ground for 40 minutes at 20-25°C at a stirring speed of 3000 rpm and a pumping rate of 400 mL/min in a KDL DYNO-mill (Willy A. Bachofen, Basel, Switzerland), provided with a 600 mL steel mixing chamber filled with 480-570 mL of glass beads of around 1 mm diameter. The plastic disc stirrer rotates at a speed of 10.2 m/sec. The aqueous suspension containing the milled pigment/stabilizer mixture is filtered, washed with water and then dried.

This stabilized pigment composition is then incorporated into polypropylene along with a hindered amine (HALS 1 or HALS 2) to give spun fibers having enhanced coloristic properties and much improved light stabilization compared to polypropylene fibers pigments with C.I. Pigment Yellow 95 and stabilized with the benzotriazole and said hindered amine, but where the pigment and stabilizer are added separately to the polypropylene in a conventional way.

### Example 23

When the pigmented polypropylene fiber used in Example 1 is replaced with pigmented polyamide nylon 6 or 66 fiber, the combination of hindered amine and UV absorber provides synergistic stabilization to the polyamide fiber far greater than the use of either stabilizer alone.

### Example 24

When the pigmented polypropylene fiber used in Example 1 is replaced with pigmented poly(ethylene terephthalate) PET fiber, the combination of hindered amine and UV absorber provides synergistic stabilization to the polyester fiber far greater than the use of either stabilizer alone.

### Example 25

Polypropylene contains standard additives described above and is pigmented with 0.25% of C.I. Pigment Violet 19.

| UVA (conc %) | HALS (conc %) | Delta E at 2930 KJ/m² |
|---|---|---|
| UVA 1 (1.0%) | - | fiber failure |
| - | HALS 1 (1.0%) | 4.5 |
| UVA 1 (0.5%) | HALS 1 (0.5%) | 0.9 |

The synergistic combination of UVA 1 plus HALS 1 at the same total concentration causes the Delta E value to fall about 80% from the value when the same total concentration of HALS 1 alone is used. UVA 1 does not protect the fiber adequately and fiber failure occurs before 2930 KJ/m² exposure occurs.

### Example 26

Polypropylene contains standard additives described above and is pigmented with 0.25% of C.I. Pigment Violet 19.

| UVA (conc %) | HALS (conc %) | Delta E at 2930 KJ/m² |
|---|---|---|
| UVA 2 (1.0%) | - | fiber failure |
| - | HALS 1 (1.0%) | 4.5 |
| UVA 2 (0.5%) | HALS 1 (0.5%) | 1.4 |

The synergistic combination of UVA 2 plus HALS 1 at the same total concentration causes the Delta E value to fall about 70% from the value when the same total concentration of HALS 1 alone is used. UVA 2 does not protect the fiber adequately and fiber failure occurs before 2930 KJ/m² exposure occurs.

### Example 27

Polypropylene contains standard additives described above and is pigmented with 0.25% of C.I. Pigment Violet 19.

| UVA (conc %) | HALS (conc %) | Delta E at 2930 KJ/m² |
|---|---|---|
| UVA 3 (1.0%) | - | fiber failure |
| - | HALS 1 (1.0%) | 4.5 |
| UVA 3 (0.5%) | HALS 1 (0.5%) | 2.4 |

The synergistic combination of UVA 3 plus HALS 1 at the same total concentration causes the Delta E value to fall about 50% from the value when the same total concentration of HALS 1 alone is used. UVA 3 does not protect the fiber adequately and fiber failure occurs before 2930 KJ/m² exposure occurs.

### Example 28

In Example 28, polypropylene fiber samples are prepared by the method given for Examples 19-21. Polypropylene (Amoco 7200P) contains 0.2% by weight of C.I. Pigment Yellow 95,01% by weight of calcium stearate, 0.075% of PHOS 1, and 0.075% of AO A. The polypropylene and stabilizers as well as 0.067% by weight of UVA 2, if it is also present, are pebbled milled or preferably dynomilled according to the procedure of Example 22. Before spinning into fiber, 0.6% by weight of HALS 1 is powder blended with the dynomilled mixture and polypropylene.

| Stabilizer*(conc) | Delta E 165.4 KJ/m² | Delta E 330.8 KJ/m² | Delta E 489.9 KJ/m² |
|---|---|---|---|
| HALS 1 (0.6%) (dynomilled - tint strength 100%) | 7.0 | 14.8 | 22.3 |
| HALS 1 (0.6%) (pebble milled - tint strength 93%) | 7.5 | 18.6 | 23.8 |
| HALS 1 (0.6%) plus UVA 1 (0.067%) (dynomilled - tint strength 108%) | 4.7 | 8.7 | 12.3 |
| HALS 1 (0.6%) plus UVA 2 (0.067%) (dynomilled - tint strength 102%) | 5.9 | 10.1 | 15.4 |

| | | | |
|---|---|---|---|
| *In addition to reducing the Delta E values significantly, the presence of a UVA reduces whitening or surface chalking of the fibers. | | | |

When these runs are repeated using a pigment concentration of 0.08%, the use of a UVA at even lower concentrations is effective in reducing Delta E values.

### Example 29

In Example 29, polypropylene fiber samples are prepared by the method given for Examples 19-21. In this Example, the UVA is added to the polypropylene and other stabilizers either before the dynomilling step or with the HALS component just before the spinning step. Polypropylene (Amoco 7200P) contains 0.25 by weight of C.I. Pigment Yellow 95, 0.1% by weight of calcium stearate, 0.075% of PHOS 1, and 0.075% of AO A. The dynomilling is carried out according to the procedure given in Example 22. Either before the dynomilling step or before the spinning step, 0.0833% by weight of UVA 1 or UVA 2 is added. Before spinning into fiber, 0.6% by weight of HALS 2 is powder blended with the dynomilled mixture (and UVA 1 or 2) and polypropylene.

| Stabilizer (conc) | Delta E 165.4 KJ/m² | Delta E 330.8 KJ/m² | Delta E 489.9 KJ/m² |
|---|---|---|---|
| HALS 2 (0.6%) (dynomilled) | 5.2 | 10.3 | 15.1 |
| HALS 2 (0.6%) plus | | | |
| UVA 1 (0.0833%) | 3.5 | 7.9 | 11.6 |
| (dynomilled with UVA added at spin step) | | | |
| HALS 2 (0.6%) plus | | | |
| UVA 1 (0.0833%) | 4.7 | 8.7 | 12.3 |
| (dynomilled with UVA added at dynomilling step) | | | |
| HALS 2 (0.6%) plus | | | |
| UVA 2 (0.0833%) | 3.7 | 8.0 | 11.7 |
| dynomilled with UVA added at spin step) | | | |
| HALS 2 (0.6%) plus | | | |
| UVA 2 (0.0833%) | 3.3 | 7.9 | 10.7 |
| (dynomilled with UVA added at dynomilling step) | | | |

There is a small, but discernible advantage in lightfastness when the UVA is added at the dynomilling step. The fibers containing the pigment composition of this invention exhibit a higher chroma when the stabilized pigment composition is prepared by comilling, for example by dynomilling.

### Example 30

When C.I. Pigment Yellow 95 is combined with an effective stabilizing amount of a mixture of HALS 1 and UVA 2, and is then exposed to actinic radiation, the pigment resists discoloration and loss of tint strength for a prolonged period.

## Claims

1. A pigmented thermoplastic polymer fiber stabilized by an effective amount of a synergistic combination of a UV absorber and a hindered amine, wherein the UV absorber is selected from the compounds
2-[2-hydroxy-5'-methylphenyl]-2H-benzotriazole;
2-[2-hydroxy-3',5 '-di-tert-butylphenyl]-2H-benzotriazole;
2-[2-hydroxy-5'-tert-butylphenyl]-2H-benzotriazole;
2-[2-hydroxy-5'-(1,1,3,3-tetramethylbutyl)phenyl]-2H-benzotriazole;
2-[2-hydroxy-5-chloro-3',5'-di-tert-butylphenyl]-2H-benzotriazole;
2-[2-hydroxy-5-chloro-3'-tert-butyl-5 '-methylphenyl]-2H-benzotriazole;
2-[2-hydroxy-3'-sec-butyl-5'-tert-butylphenyl]-2H-benzotriazole;
2-[2-hydroxy-4'-octoxyphenyl]-2H-benzotriazole;
2-[2-hydroxy-3',5'-di-tert-amylphenyl]-2H-benzotriazole;
2-[2-hydroxy-3'-tert-butyl-5'-(2-(omega-hydroxy-octa-(ethyleneoxy)carbonyl-ethyl)-phenyl]-2H-benzotriazole;
2-[2-hydroxy-3'-dodecyl-5'-methylphenyl]-2H-benzotriazole;
2-[2-hydroxy-3'-tert-butyl-5 '-(2-octyloxycarbonyl)ethylphenyl]-2H-benzotriazole;
2-[2-hydroxy-3'-dodecyl-5'-methylphenyl]-2H-benzotriazole;
2-{2-hydroxy-3-tert-butyl-5-[2-(methoxycarbonyl)ethyl]phenyl}-2H-benzotriazole;
2-[2-hydroxy-3,5-di(a,a-dimethylbenzyl)phenyl]-2H-benzotriazole;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2,6-bis-(2,4-dimethylphenyl)-4-(2,4-dihydroxyphenyl)-s-triazine;
2,4-bis(2,4-dihydroxyphenyl)-6-(4-chlorophenyl)-s-triazine;
2,4-bis[2-hydroxy-4-(2-hydroxyethoxy)phenyl]-6-(4-chlorophenyl)-s-triazine;
2,4-bis[2-hydroxy-4-(2-hydroxy-4-(2-hydroxyethoxy)phenyl]-6-(2,4-dimethylphenyl)-s-triazine;
2,4-bis[2-hydroxy-4-(2-hydroxyethoxy)phenyl]-6-(4-bromophenyl)-s-triazine;
2,4-bis[2-hydroxy-4-(2-acetoxyethoxy)phenyl]-6-(4-chlorophenyl)-s-triazine;
2,4-bis(2,4-dihydroxyphenyl)-6-(2,4-dimethylphenyl)-s-triazine; or
2-hydroxy-4-dodecyloxybenzophenone; or
2-hydroxy-4-octyloxy-benzophenone, the thermoplastic polymer optionally including further UV absorbers and other additives.

2. A fiber according to claim 1 wherein the thermoplastic polymer is a polyolefin, a polyamide or a polyester.

3. A fiber according to claim 2 wherein the polymer is polypropylene, polyamide or polyester.

4. A fiber according to claim 3 wherein the polymer is polypropylene, polycaprolactam (nylon 6), poly(hexamethylene adipamide) (nylon 66), poly(ethylene terephthalate) PET or PET copolymers.

5. A fiber according to claim 1 wherein the hindered amine is derived from a 2,2,6,6-tetramethylpiperidine.

6. A fiber according to claim 1 wherein the effective amount of the combination of stabilizers of this invention is 0.25 to 6% by weight, based on the thermoplastic fiber; where the effective amount of hindered amine is 0.05 to 5% by weight, based on the thermoplastic fiber; and where the effective amount of the UV absorber is 0.05 to 5% by weight. based on the thermoplastic fiber.

7. A fiber according to claim 1wherein the UV absorber is selected from the compounds
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2-hydroxy-4-dodecyloxybenzophenone; or
2-hydroxy-4-octyloxy-benzophenone.

8. A fiber according to claim 1wherein the hindered amine is selected from the compounds
the polycondensation product of 1-(2-hydroxyethyl)-2,2,6,6-tetramethyl-4-hydroxypiperidine and succinic acid;
the polycondensation product of 4,4'-hexamethylene-bis(amino-2,2,6,6-tetramethylpiperidine) and 2,4-dichloro-6-tert-octylamino-s-triazine;
the polycondensation product of 4,4'-hexamethylene-bis(amino-2,2,6,6-tetramethylpiperidine) and 2,4-dichloro-6-morpholino-s-triazine;
poly[methyl 3-(2,2,6,6-tetramethylpiperidin-4-yloxy)propyl]siloxane;
bis(2,2,6,6-tetramethylpiperidin-4-yl) cyclohexylenedioxydimethylmalonate;
1,3,5-tris{N-cyclohexyl-N-[2-(2,2,6,6-tetramethylpiperazin-3-on-4-yl)ethyl]amino-s-triazine;
N,N',N",N'"-tetrakis[4,6-bis(butyl-(2,2,6,6-tetramethylpiperidin-4-yl)amino)-s-triazin-2-yl]-1,10-diamino-4,7-diazadecane; or
2,2,6,6-tetramethylpiperidin-4-yl C₁₆-C₂₀alkanoate.

9. A fiber according to claim 1 wherein the thermoplastic polymer is pigmented by a pigment selected from the group consisting of the azo, azomethine, methine, anthraquinone, phthalocyanine, perinone, perylene, dioxazine, diaryldiketopyrrolopyrrole, thioindigo, iminoisoindoline, iminoisoindolinone, quinacridone, quinacridonequinone, flavanthrone, indanthrone, anthrapyrimidine and quinophthalone pigments, and also the metal complexes of azo, azomethine and methine pigments, or by a pigment selected from the group consisting of the metal oxides, antimony yellow, lead chromate, lead chromate sulfate, lead molybdate, ultramarine blue, cobalt blue, manganese blue, chrome oxide green, hydrated chrome oxide green, cobalt green, and also metal sulfides, cadmium sulfoselenide, zinc ferrite, cadmium-mercury sulfide, bismuth vanadate and mixed metal oxides (MMO).

10. A fiber according to claim 1 wherein the pigment is organic.

11. A stabilized pigment composition which comprises
(a) an organic or inorganic pigment, and
(b) an effective stabilizing amount of a mixture of
(i) a hindered amine, and
(ii) a UV absorber which is selected from the compounds
2-[2-hydroxy-5'-methylphenyl]-2H-benzotriazole;
2-[2-hydroxy-3,5'-di-tert-butylphenyl]-2H-benzotriazole;
2-[2-hydroxy-5'-tert-butylphenyl]-2H-benzotriazole;
2-[2-hydroxy-5'-(1,1,3,3-tetramethylbutyl)phenyl]-2H-benzotriazole;
2-[2-hydroxy-5-chloro-3',5'-di-tert-butylphenyl]-2H-benzotriazole;
2-[2-hydroxy-5-chloro-3'-tert-butyl-5'-methylphenyl]-2H-benzotriazole;
2-[2-hydroxy-3'-sec-butyl-5'-tert-butylphenyl]-2H-benzotriazole;
2-[2-hydroxy-4'-octoxyphenyl]-2H-benzotriazole;
2-[2-hydroxy-3',5'-di-tert-amylphenyl]-2H-benzotriazole;
2-[2-hydroxy-3'-tert-butyl-5'-(2-(omega-hydroxy-octa-(ethyleneoxy)carbonyl-ethyl)-phenyl]-2H-benzotriazole;
2-[2-hydroxy-3'-dodecyl-5'-methylphenyl]-2H-benzotriazole;
2-[2-hydroxy-3'-tert-butyl-5'-(2-octyloxycarbonyl)ethylphenyl]-2H-benzotriazole;
2-[2-hydroxy-3'-dodecyl-5'-methylphenyl]-2H-benzotriazole;
2-{2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2,6-bis-(2,4-dimethylphenyl)-4-(2,4-dihydroxyphenyl)-s-triazine;
2,4-bis(2,4-dihydroxyphenyl)-6-(4-chlorophenyl)-s-triazine;
2,4-bis[2-hydroxy-4-(2-hydroxyethoxy)phenyl]-6-(4-chlorophenyl)-s-triazine;
2,4-bis[2-hydroxy-4-(2-hydroxy-4-(2-hydroxyethoxy)phenyl]-6-(2,4-dimethylphenyl)-s-triazine;
2,4-bis[2-hydroxy-4-(2-hydroxyethoxy)phenyl]-6-(4-bromophenyl)-s-triazine;
2,4-bis[2-hydroxy-4-(2-acetoxyethoxy)phenyl]-6-(4-chlorophenyl)-s-triazine;
2,4-bis(2,4-dihydroxyphenyl)-6-(2,4-dimethylphenyl)-s-triazine; or
2-hydroxy-4-dodecyloxybenzophenone; or
2-hydroxy-4-octyloxy-benzophenone.

12. A composition according to claim 11 wherein the effective amount of the combination of stabilizers of this invention is 10 to 50% by weight, based on the pigment; where the effective amount of hindered amine is 1 to 49% by weight, based on the pigment; and where the effective amount of the UV absorber is 1to 49% by weight, based on the pigment.

13. A process for the preparation of a stabilized pigment composition according to claim 11 which comprises
comilling an organic or inorganic pigment with 10 to 50% by weight, based on the pigment, of the mixture of stabilizers where said mixture is 1 to 49% by weight, based on the pigment, of a hindered amine; and 1 to 49% by weight, based on the pigment, of a UV absorber which is selected from the compounds
2-[2-hydroxy-5'-methylphenyl]-2H-benzotriazole;
2-[2-hydroxy-3',5'-di-tert-butylphenyl]-2H-benzotriazole;
2-[2-hydroxy-5'-tert-butylphenyl]-2H-benzotriazole;
2-[2-hydroxy-5'-(1,1,3,3-tetramethylbutyl)phenyl]-2H-benzotriazole;
2-[2-hydroxy-5-chloro-3',5'-di-tert-butylphenyl]-2H-benzotriazole;
2-[2-hydroxy-5-chloro-3 '-tert-butyl-5'-methylphenyl]-2H-benzotriazole;
2-[2-hydroxy-3'-sec-butyl-5'-tert-butylphenyl]-2H-benzotriazole;
2-[2-hydroxy-4'-octoxyphenyl]-2H-benzotriazole;
2-[2-hydroxy-3',5'-di-tert-amylphenyl]-2H-benzotriazole;
2-[2-hydroxy-3'-tert-butyl-5'-(2-(omega-hydroxy-octa-(ethyleneoxy)carbonyl-ethyl)-phenyl]-2H-benzotriazole;
2-[2-hydroxy-3'-dodecyl-5'-methylphenyl]-2H-benzotriazole;
2-[2-hydroxy-3'-tert-butyl-5'-(2-octyloxycarbonyl)ethylphenyl]-2H-benzotriazole;
2-[2-hydroxy-3'-dodecyl-5'-methylphenyl]-2H-benzotriazole;
2-{ 2-hydroxy-3-tert-butyl-5-[2-(methoxycarbonyl)ethyl]phenyl}-2H-benzotriazole;
2-[2-hydroxy-3,5-di(α,α-dimethylbenzyl)phenyl]-2H-benzotriazole;
2-(2-hydroxy-3-α-cumyl-5-tert-octylphenyl)-2H-benzotriazole;
5-benzenesulfonyl-2-(2-hydroxy-3,5-di-tert-butylphenyl)-2H-benzotriazole;
2,4-diphenyl-6-(2-hydroxy-4-hexyloxyphenyl)-s-triazine;
2,4-bis(2,4-dimethylphenyl)-6-(2-hydroxy-4-octyloxyphenyl)-s-triazine;
2,6-bis-(2,4-dimethylphenyl)-4-(2,4-dihydroxyphenyl)-s-triazine;
2,4-bis(2,4-dihydroxyphenyl)-6-(4-chlorophenyl)-s-triazine;
2,4-bis[2-hydroxy-4-(2-hydroxyethoxy)phenyl]-6-(4-chlorophenyl)-s-triazine;
2,4-bis[2-hydroxy-4-(2-hydroxy-4-(2-hydroxyethoxy)phenyl]-6-(2,4-dimethylphenyl)-s-triazine;
2,4-bis[2-hydroxy-4-(2-hydroxyethoxy)phenyl]-6-(4-bromophenyl)-s-triazine;
2,4-bis[2-hydroxy-4-(2-acetoxyethoxy)phenyl]-6-(4-chlorophenyl)-s-triazine;
2,4-bis(2,4-dihydroxyphenyl)-6-(2,4-dimethylphenyl)-s-triazine; or
2-hydroxy-4-dodecyloxybenzophenone; or
2-hydroxy-4-octyloxy-benzophenone.

## Patentansprüche

1. Pigmentierte Faser aus thermoplastischem Polymer, stabilisiert durch eine wirksame Menge einer synergistischen Kombination eines UV-Absorptionsmittels und eines gehinderten Amins, wobei das UV-Absorptionsmittel ausgewählt ist aus den Verbindungen:
2-[2-Hydroxy-5'-methylphenyl]-2H-benzotriazol,
2-[2-Hydroxy-3',5'-di-tert-butylphenyl]-2H-benzotriazol,
2-[2-Hydroxy-5'-tert-butylphenyl]-2H-benzotriazol,
2-[2-Hydroxy-5'-(1,1,3,3-tetramethylbutyl)phenyl]-2H-benzotriazol,
2-[2-Hydroxy-5-chlor-3',5'-di-tert-butylphenyl]-2H-benzotriazol,
2-[2-Hydroxy-5-chlor-3'-tert-butyl-5'-methylphenyl]-2H-benzotriazol,
2-[2-Hydroxy-3'-sec-butyl-5'-tert-butylphenyl]-2H-benzotriazol,
2-[2-Hydroxy-4'-octoxyphenyl]-2H-benzotriazol,
2-[2-Hydroxy-3',5'-di-tert-amylphenyl]-2H-benzotriazol,
2-[2-Hydroxy-3'-tert-butyl-5'-(2-(omega-hydroxy-octa-(ethylenoxy)carbonylethyl)phenyl]-2H-benzotriazol,
2-[2-Hydroxy-3'-dodecyl-5'-methylphenyl]-2H-benzotriazol,
2-[2-Hydroxy-3'-tert-butyl-5'-(2-octyloxycarbonyl)ethylphenyl]-2H-benzotriazol,
2-[2-Hydroxy-3'-dodecyl-5'-methylphenyl]-2H-benzotriazol,
2-{2-Hydroxy-3-tert-butyl-5-[2-(methoxycarbonyl)-ethyl]phenyl}-2H-benzotriazol,
2-[2-Hydroxy-3,5-di(α,α-dimethylbenzyl)phenyl]-2H-benzotriazol,
2-(2-Hydroxy-3-α-cumyl-5-tert-octylphenyl)-2H-benzotriazol,
5-Benzolsulfonyl-2-(2-hydroxy-3,5-di-tert-butylphenyl)-2H-benzotriazol,
2,4-Diphenyl-6-(2-hydroxy-4-hexyloxyphenyl)-s-triazin,
2,4-Bis(2,4-dimethylphenyl)-6-(2-hydroxy-4-octyloxyphenyl)-s-triazin,
2,6-Bis(2,4-dimethylphenyl)-4-(2,4-dihydroxyphenyl)-s-triazin,
2,4-Bis(2,4-dihydroxyphenyl)-6-(4-chlorphenyl)-s-triazin,
2,4-Bis[2-hydroxy-4-(2-hydroxyethoxy)phenyl]-6-(4-chlorphenyl)-s-triazin,
2,4-Bis[2-hydroxy-4-(2-hydroxy-4-(2-hydroxyethoxy)-phenyl]-6-(2,4-dimethylphenyl)-s-triazin,
2,4-Bis[2-hydroxy-4-(2-hydroxyethoxy)phenyl]-6-(4-bromphenyl)-s-triazin,
2,4-Bis[2-hydroxy-4-(2-acetoxyethoxy)phenyl]-6-(4-chlorphenyl)-s-triazin,
2,4-Bis(2,4-dihydroxyphenyl)-6-(2,4-dimethylphenyl)-s-triazin, oder
2-Hydroxy-4-dodecyloxybenzophenon, oder
2-Hydroxy-4-octyloxybenzophenon,
wobei das thermoplastische Polymer gegebenenfalls weitere UV-Absorptionsmittel und weitere Additive einschließt.

2. Faser nach Anspruch 1, wobei das thermoplastische Polymer ein Polyolefin, ein Polyamid oder ein Polyester ist.

3. Faser nach Anspruch 2, wobei das Polymer Polypropylen, Polyamid oder Polyester ist.

4. Faser nach Anspruch 3, wobei das Polymer Polypropylen, Polycaprolactam (Nylon 6), Poly(hexamethylenadipamid) (Nylon 66), Poly(ethylenterephthalat) PET oder PET-Copolymere ist.

5. Faser nach Anspruch 1, wobei das gehinderte Amin von einem 2,2,6,6-Tetramethylpiperidin abgeleitet ist.

6. Faser nach Anspruch 1, wobei die wirksame Menge der Kombination von Stabilisatoren dieser Erfindung 0,25 bis 6 Gewichtsprozent, bezogen auf die thermoplastische Faser, ist, wobei die wirksame Menge an gehindertem Amin 0,05 bis 5 Gewichtsprozent, bezogen auf die thermoplastische Faser, ist und wobei die wirksame Menge des UV-Absorptionsmittels 0,05 bis 5 Gewichtsprozent, bezogen auf die thermoplastische Faser, ist.

7. Faser nach Anspruch 1, wobei das UV-Absorptionsmittel ausgewählt ist aus den Verbindungen:
2-{2-Hydroxy-3-tert-butyl-5-[2-(methoxycarbonyl)-ethyl]phenyl}-2H-benzotriazol,
2-[2-Hydroxy-3,5-di(α,α-dimethylbenzyl)phenyl]-2H-benzotriazol,
2,4-Diphenyl-6-(2-hydroxy-4-hexyloxyphenyl)-s-triazin,
2,4-Bis(2,4-dimethylphenyl)-6-(2-hydroxy-4-octyloxyphenyl)-s-triazin,
2-(2-Hydroxy-3-α-cumyl-5-tert-octylphenyl)-2H-benzotriazol,
5-Benzolsulfonyl-2-(2-hydroxy-3,5-di-tert-butylphenyl)-2H-benzotriazol,
2-Hydroxy-4-dodecyloxybenzophenon oder
2-Hydroxy-4-octyloxybenzophenon.

8. Faser nach Anspruch 1, wobei das gehinderte Amin ausgewählt ist aus den Verbindungen:
das Polykondensationsprodukt von 1-(2-Hydroxyethyl)-2,2,6,6-tetramethyl-4-hydroxypiperidin und Bernsteinsäure,
das Polykondensationsprodukt von 4,4'-Hexamethylenbis(amino-2,2,6,6-tetramethylpiperidin) und 2,4-Dichlor-6-tert-octylamino-s-triazin,
das Polykondensationsprodukt von 4,4'-Hexamethylenbis(amino-2,2,6,6-tetramethylpiperidin) und 2,4-Dichlor-6-morpholino-s-triazin,
Poly[methyl-3-(2,2,6,6-tetramethylpiperidin-4-yloxy)-propyl]siloxan,
Bis(2,2,6,6-tetramethylpiperidin-4-yl)cyclohexylendioxydimethylmalonat,
1,3,5-Tris{N-cyclohexyl-N-[2-(2,2,6,6-tetramethylpiperazin-3-on-4-yl)ethyl]amino}-s-triazin,
N,N',N",N'"-Tetrakis[4,6-bis(butyl(2,2,6,6-tetramethylpiperidin-4-yl)amino)-s-triazin-2-yl]-1,10-diamino-4,7-diazadecan oder
2,2,6,6-Tetramethylpiperidin-4-yl-C₁₆-C₂₀-alkanoat.

9. Faser nach Anspruch 1, wobei das thermoplastische Polymer mit einem Pigment, ausgewählt aus der Gruppe, bestehend aus den Azo-, Azomethin-, Methin-, Anthrachinon-, Phthalocyanin-, Perinon-, Perylen-, Dioxazin-, Diaryldiketopyrrolopyrrol-, Thioindigo-, Iminoisoindolin-, Iminoisoindolinon-, Chinacridon-, Chinacridonchinon-, Flavanthron-, Indanthron-, Anthrapyrimidin- und Chinophthalonpigmenten und ebenfalls den Metallkomplexen von Azo-, Azomethin- und Methinpigmenten, oder mit einem Pigment, ausgewählt aus der Gruppe, bestehend aus den Metalloxiden, Antimongelb, Bleichromat, Bleichromatsulfat, Bleimolybdat, Ultramarinblau, Cobaltblau, Manganblau, Chromoxidgrün, hydratisiertem Chromoxidgrün, Cobaltgrün und ebenfalls Metallsulfiden, Cadmiumsulfoselenid, Zinkferrit, Cadmiumquecksilbersulfid, Wismutvanadat und gemischten Metalloxiden (MMO), pigmentiert ist.

10. Faser nach Anspruch 1, wobei das Pigment organisch ist.

11. Stabilisierte Pigmentzusammensetzung, umfassend:
(a) ein organisches oder anorganisches Pigment und
(b) eine wirksam stabilisierende Menge eines Gemisches von
(i) einem gehinderten Amin und
(ii) einem UV-Absorptionsmittel, das ausgewählt ist aus den Verbindungen:
2-[2-Hydroxy-5'-methylphenyl]-2H-benzotriazol,
2-[2-Hydroxy-3',5'-di-tert-butylphenyl]-2H-benzotriazol,
2-[2-Hydroxy-5'-tert-butylphenyl]-2H-benzotriazol,
2-[2-Hydroxy-5'-(1,1,3,3-tetramethylbutyl)phenyl]-2H-benzotriazol,
2-[2-Hydroxy-5-chlor-3',5'-di-tert-butylphenyl]-2H-benzotriazol,
2-[2-Hydroxy-5-chlor-3'-tert-butyl-5'-methylphenyl]-2H-benzotriazol,
2-[2-Hydroxy-3'-sec-butyl-5'-tert-butylphenyl]-2H-benzotriazol,
2-[2-Hydroxy-4'-octoxyphenyl]-2H-benzotriazol,
2-[2-Hydroxy-3',5'-di-tert-amylphenyl]-2H-benzotriazol,
2-[2-Hydroxy-3'-tert-butyl-5'-(2-(omega-hydroxy-octa(ethylenoxy)carbonylethyl)phenyl]-2H-benzotriazol,
2-[2-Hydroxy-3'-dodecyl-5'-methylphenyl]-2H-benzotriazol,
2-[2-Hydroxy-3'-tert-butyl-5'-(2-octyloxycarbonyl)-ethylphenyl]-2H-benzotriazol,
2-[2-Hydroxy-3'-dodecyl-5'-methylphenyl]-2H-benzotriazol,
2-[2-Hydroxy-3-tert-butyl-5-[2-(methoxycarbonyl)-ethyl]phenyl)-2H-benzotriazol,
2-[2-Hydroxy-3,5-di(α,α-dimethylbenzyl)phenyl]-2H-benzotriazol,
2-(2-Hydroxy-3-α-cumyl-5-tert-octylphenyl)-2H-benzotriazol,
5-Benzolsulfonyl-2-(2-hydroxy-3,5-di-tert-butylphenyl)-2H-benzotriazol,
2,4-Diphenyl-6-(2-hydroxy-4-hexyloxyphenyl)-s-triazin,
2,4-Bis(2,4-dimethylphenyl)-6-(2-hydroxy-4-octyloxyphenyl)-s-triazin,
2,6-Bis(2,4-dimethylphenyl)-4-(2,4-dihydroxyphenyl)-s-triazin,
2,4-Bis(2,4-dihydroxyphenyl)-6-(4-chlorphenyl)-5-triazin,
2,4-Bis[2-hydroxy-4-(2-hydroxyethoxy)phenyl]-6-(4-chlorphenyl)-s-triazin,
2,4-Bis[2-hydroxy-4-(2-hydroxy-4-(2-hydroxyethoxy)-phenyl]-6-(2,4-dimethylphenyl)-s-triazin,
2,4-Bis[2-hydroxy-4-(2-hydroxyethoxy)phenyl]-6-(4-bromphenyl)-s-triazin,
2,4-Bis[2-hydroxy-4-(2-acetoxyethoxy)phenyl]-6-(4-chlorphenyl)-s-triazin,
2,4-Bis(2,4-dihydroxyphenyl)-6-(2,4-dimethylphenyl)-s-triazin, oder
2-Hydroxy-4-dodecyloxybenzophenon, oder
2-Hydroxy-4-octyloxybenzophenon.

12. Zusammensetzung nach Anspruch 11, wobei die wirksame Menge der Kombination von Stabilisatoren dieser Erfindung 10 bis 50 Gewichtsprozent, bezogen auf das Pigment, ist, wobei die wirksame Menge an gehindertem Amin 1 bis 49 Gewichtsprozent, bezogen auf das Pigment, ist, und wobei die wirksame Menge des UV-Absorptionsmittels 1 bis 49 Gewichtsprozent, bezogen auf das Pigment, ist.

13. Verfahren für die Herstellung einer stabilisierten Pigmentzusammensetzung nach Anspruch 11, umfassend
Co-Vermahlen eines organischen oder anorganischen Pigments mit 10 bis 50 Gewichtsprozent, bezogen auf das Pigment, des Gemisches von Stabilisatoren, wobei das Gemisch aus 1 bis 49 Gewichtsprozent, bezogen auf das Pigment, einem gehinderten Amin, und 1 bis 49 Gewichtsprozent, bezogen auf das Pigment, einem UV-Absorptionsmittel besteht, ausgewählt aus den Verbindungen:
2-[2-Hydroxy-5'-methylphenyl]-2H-benzotriazol,
2-[2-Hydroxy-3',5'-di-tert-butylphenyl]-2H-benzotriazol,
2-[2-Hydroxy-5'-tert-butylphenyl]-2H-benzotriazol,
2-[2-Hydroxy-5'-(1,1,3,3-tetramethylbutyl)phenyl]-2H-benzotriazol,
2-[2-Hydroxy-5-chlor-3',5'-di-tert-butylphenyl]-2H-benzotriazol,
2-[2-Hydroxy-5-chlor-3'-tert-butyl-5'-methylphenyl]-2H-benzotriazol,
2-[2-Hydroxy-3'-sec-butyl-5'-tert-butylphenyl]-2H-benzotriazol,
2-[2-Hydroxy-4'-octoxyphenyl]-2H-benzotriazol,
2-[2-Hydroxy-3',5'-di-tert-amylphenyl]-2H-benzotriazol,
2-[2-Hydroxy-3'-tert-butyl-5'-(2-(omega-hydroxy-octa(ethylenoxy)carbonylethyl)phenyl]-2H-benzotriazol,
2-[2-Hydroxy-3'-dodecyl-5'-methylphenyl]-2H-benzotriazol,
2-[2-Hydroxy-3'-tert-butyl-5'-(2-octyloxycarbonyl)-ethylphenyl]-2H-benzotriazol,
2-[2-Hydroxy-3'-dodecyl-5'-methylphenyl]-2H-benzotriazol,
2-{2-Hydroxy-3-tert-butyl-5-[2-(methoxycarbonyl)-ethyl]phenyl}-2H-benzotriazol,
2-[2-Hydroxy-3,5-di(α,α-dimethylbenzyl)phenyl]-2H-benzotriazol,
2-(2-Hydroxy-3-α-cumyl-5-tert-octylphenyl)-2H-benzotriazol,
5-Benzolsulfonyl-2-(2-hydroxy-3,5-di-tert-butylphenyl)-2H-benzotriazol,
2,4-Diphenyl-6-(2-hydroxy-4-hexyloxyphenyl)-s-triazin,
2,4-Bis(2,4-dimethylphenyl)-6-(2-hydroxy-4-octyloxyphenyl)-s-triazin,
2,6-Bis(2,4-dimethylphenyl)-4-(2,4-dihydroxyphenyl)-s-triazin,
2,4-Bis(2,4-dihydroxyphenyl)-6-(4-chlorphenyl)-5-triazin,
2,4-Bis[2-hydroxy-4-(2-hydroxyethoxy)phenyl]-6-(4-chlorphenyl)-s-triazin,
2,4-Bis[2-hydroxy-4-(2-hydroxy-4-(2-hydroxyethoxy)-phenyl]-6-(2,4-dimethylphenyl)-s-triazin,
2,4-Bis[2-hydroxy-4-(2-hydroxyethoxy)phenyl]-6-(4-bromphenyl)-s-triazin,
2,4-Bis[2-hydroxy-4-(2-acetoxyethoxy)phenyl]-6-(4-chlorphenyl)-s-triazin,
2,4-Bis(2,4-dihydroxyphenyl)-6-(2,4-dimethylphenyl)-s-triazin, oder
2-Hydroxy-4-dodecyloxybenzophenon, oder
2-Hydroxy-4-octyloxybenzophenon.

## Revendications

1. Fibre polymère thermoplastique pigmentée stabilisée par une quantité efficace d'une combinaison synergique d'un absorbeur UV et d'une amine encombrée, dans laquelle on choisit l'absorbeur UV parmi les composés suivants :
2-[2-hydroxy-5'-méthylphényl]-2H-benzotriazole;
2-[2-hydroxy-3',5'-di-tert-butylphényl]-2H-benzotriazole ;
2-[2-hydroxy-5'-tert-butylphényl]-2H-benzotriazole ;
2-[2-hydroxy-5'-(1,1,3,3-tétraméthylbutyl)phényl]-2H-benzotriazole ;
2-[2-hydroxy-5-chloro-3',5'-di-tert-butylphényl]-2H-benzotriazole ;
2-[2-hydroxy-5-chloro-3'-tert-butyl-5'-méthylphényl]-2H-benzotriazole ;
2-[2-hydroxy-3'-sec-butyl-5'-tert-butylphényl]-2H-benzotriazole ;
2-[2-hydroxy-4'-octoxyphényl]-2H-benzotriazole;
2-[2-hydroxy-3',5'-di-tert-amylphényl]-2H-benzotriazole ;
2-[2-hydroxy-3'-tert-butyl-5'-(2-(oméga-hydroxy-octa-(éthylèneoxy)-carbonyléthyl)-phényl]-2H-benzotriazole ;
2-[2-hydroxy-3'-dodécyl-5'-méthylphényl]-2H-benzotriazole ;
2-[2-hydroxy-3'-tert-butyl-5'-(2-octyloxycarbonyl)-éthylphényl]-2H-benzotriazole ;
2-[2-hydroxy-3'-dodécyl-5'-méthylphényl]-2H-benzotriazole ;
2-{2-hydroxy-3-tert-butyl-5-[2-(méthoxycarbonyl)-éthyl]phényl}-2H-benzotriazole ;
2-[2-hydroxy-3,5-di-(α,α-diméthylbenzyl)phényl]-2H-benzotriazole.
2-(2-hydroxy-3-α-cumyl-5-tert-octylphényl)-2H-benzotriazole ;
5-benzènesulfonyl-2-(2-hydroxy-3,5-di-tert-butylphényl)-2H-benzotriazole ;
2,4-diphényl-6-(2-hydroxy-4-hexyloxyphényl)-s-triazine ;
2,4-bis-(2,4-diméthylphényl)-6-(2-hydroxy-4-octyloxy-phényl)-s-triazine ;
2,6-bis-(2,4-diméthylphényl)-4-(2,4-dihydroxyphényl)-s-triazine ;
2,4-bis-(2,4-dihydroxyphényl)-6-(4-chlorophényl)-s-triazine ;
2,4-bis-[2-hydroxy-4-(2-hydroxyéthoxy)phényl]-6-(4-chlorophényl)-s-triazine ;
2,4-bis-[2-hydroxy-4-(2-hydroxy-4-(2-hydroxyéthoxy)-phényl]-6-(2,4-diméthylphényl)-s-triazine ;
2,4-bis-[2-hydroxy-4-(2-hydroxyéthoxy)phényl]-6-(4-bromophényl)-s-triazine ;
2,4-bis-[2-hydroxy-4-(2-acétoxyéthoxy)-phényl]-6-(4-chlorophényl)-s-triazine ;
2,4-bis-(2,4-dihydroxyphényl)-6-(2,4-diméthylphényl)-s-triazine ; ou
2-hydroxy-4-dodécyloxybenzophénone ; ou
2-hydroxy-4-octyloxy-benzophénone, le polymère thermoplastique comprenant facultativement de plus des absorbeurs UV et d'autres additifs.

2. Fibre selon la revendication 1, où le polymère thermoplastique est une polyoléfine, un polyamide ou un polyester.

3. Fibre selon la revendication 2, où le polymère est le polypropylène, le polyamide ou le polyester.

4. Fibre selon la revendication 3, où le polymère est le polypropylène, le polycaprolactame (nylon 6), le poly(hexaméthylène-adipamide) (nylon 66), le poly(téréphtalate d'éthylène) PET ou des copolymères de PET.

5. Fibre selon la revendication 1, où l'amine encombrée dérive d'une 2, 2, 6, 6-tétraméthylpipéridine.

6. Fibre selon la revendication 1, où la quantité efficace de la combinaison de stabilisants de la présente invention est 0,25 à 6 % en poids, par rapport à la fibre thermoplastique ; où la quantité efficace d'amine encombrée est de 0,05 à 5 % en poidss par rapport à la fibre thermoplastique ; et où la quantité efficace d'absorbeur UV est de 0,05 à 5 % en poids, par rapport à la fibre thermoplastique.

7. Fibre selon la revendication 1, où l'absorbeur UV est choisi parmi les composés :
2-{2-hydroxy-3-tert-butyl-5-[2-(méthoxycarbonyl)éthyl]-phényl}-2H-benzotriazole;
2-[2-hydroxy-3,5-di(α,α-diméthylbenzyl)phényl]-2H-benzotriazole ;
2,4-diphényl-6-(2-hydroxy-4-hexyloxyphényl)-s-triazine ;
2,4-bis-(2,4-diméthylphényl)-6-(2-hydroxy-4-octyloxyphényl)-s-triazine ;
2-(2-hydroxy-3-α-cumyl-5-tert-octylphényl)-2H-benzotriazole ;
5-benzènesulfonyl-2-(2-hydroxy-3,5-di-tert-butylphényl)-2H-benzotriazole ;
2-hydroxy-4-dodécyloxybenzophénone; ou
2-hydroxy-4-octyloxy-benzophénone.

8. Fibre selon la revendication 1, où l'amine encombrée est choisie parmi les composés suivants :
produit de polycondensation de la 1-(2-hydroxyéthyl)-2,2,6,6-tétraméthyl-4-hydroxypipéridine et de l'acide succinique ;
produit de polycondensation de la 4,4'-hexaméthylène-bis-(amino-2,2,6,6-tétraméthylpipéridine) et de la 2,4-dichloro-6-tert-octylamino-s-triazine ;
produit de polycondensation de la 4,4'-hexaméthylène-bis-(amino-2,2,6,6-tétraméthylpipéridine) et de la 2,4-dichloro-6-morpholino-s-triazine;
poly[méthyl-3-(2,2,6,6-tétraméthylpipéridin-4-yloxy)-propyl]siloxane;
cyclohéxylène-dioxydiméthylmalonate de bis-(2,2,6,6-tétraméthylpipéridine-4-yle);
1,3,5-tris-{N-cyclohexyl-N-[2-(2,2,6,6-tétraméthylpipérazin-3-on-4-yle)éthyl]amino-s-triazine;
N,N',N",N'"-tétrakis[4,6-bis-(butyl-(2,2,6,6-tétraméthylpipéridin-4-yl)amino)-s-triazin-2-yl]-1,10-diamino-4,7-diazadécane; ou
alcanoate en C₁₆-C₂₀ de 2,2,6,6-tétraméthylpipéridin-4-yle.

9. Fibre selon la revendication 1, où le polymère thermoplastique est pigmenté avec un pigment choisi dans le groupe constitué par les pigments azoïques, d'azométhine, de méthine, d'anthraquinone, de phtalocyanine, de périnone, de pérylène, de dioxazine, de diaryldicétopyrrolo-pyrrole, de thioindigo, d'iminoisoindoline, d'iminoisoindolinone, de quinacridone, de quinacridonequinone, de flavanthrone, d'indanthrone, d'anthrapyrimidine et de quinophtalone, et aussi des complexes métalliques de pigments azoïques, d'azométhine et de méthine, ou par un pigment choisi dans le groupe constitué d'oxydes métalliques, de jaune antimoine, de chromate de plomb, de chromosulfate de plomb, de molybdate de plomb, de bleu ultramarine, de bleu de cobalt, le bleu de manganèse, de vert d'oxyde de chrome, de vert d'oxyde de chrome hydraté, de vert de cobalt et aussi des sulfures métalliques, de sulfoséléniure de cadmium, de ferrite de zinc, de sulfure de mercuro-cadmium, de vanadate de bismuth et des oxydes métalliques mixtes (OMM).

10. Fibre selon la revendication 1, où le pigment est organique.

11. Composition de pigment stabilisée comprenant :
(a) un pigment organique ou inorganique, et
(b) une quantité stabilisante efficace d'un mélange de
(i) une amine encombrée, et
(ii) un absorbeur UV, choisi parmi les composés :
2-[2-hydroxy-5'-méthylphényl]-2H-benzotriazole ;
2-[2-hydroxy-3',5'-di-tert-butylphényl]-2H-benzotriazole ;
2-[2-hydroxy-5'-tert-butylphényl]-2H-benzotriazole ;
2-[2-hydroxy-5'-(1,1,3,3-tétraméthylbutyl)phényl]-2H-benzotriazole ;
2-[2-hydroxy-5-chloro-3',5'-di-tert-butylphényl]-2H-benzotriazole ;
2-[2-hydroxy-5-chloro-3'-tert-butyl-5'-méthylphényl]-2H-benzotriazole ;
2-[2-hydroxy-3'-sec-butyl-5'-tert-butylphényl]-2H-benzotriazole ;
2-[2-hydroxy-4'-octoxwhényl]-2H-benzotriazole ;
2-[2-hydroxy-3',5'-di-tert-amylphényl]-2H-benzotriazole ;
2-[2-hydroxy-3'-tert-butyl-5'-(2-(oméga-hydroxyocta-(éthylèneoxy)-carbonyléthyl)-phényl]-2H-benzotriazole ;
2-[2-hydroxy-3'-dodécyl-5'-méthylphényl]-2H-benzotriazole ;
2-[2-hydroxy-3'-tert-butyl-5'-(2-octyloxycarbonyl)-éthylphényl]-2H-benzotriazole ;
2-[2-hydroxy-3'-dodécyl-5'-méthylphényl]-2H-benzotriazole ;
2-{2-hydroxy-3-tert-butyl-5-[2-(méthoxycarbonyl)-éthyl]phényl}-2H-benzotriazole ;
2-[2-hydroxy-3,5-di-α,α-diméthylbenzyl)phényl]-2H-benzotriazole;
2-(2-hydroxy-3-α-cumyl-5-tert-octylphényl)-2H-benzotriazole ;
5-benzènesulfonyl-2-(2-hydroxy-3,5-di-tert-butylphényl)-2H-benzotriazole ;
2,4-diphényl-6-(2-hydroxy-4-hexyloxyphényl)-s-triazine ;
2,4-bis-(2,4-diméthylphényl)-6-(2-hydroxy-4-octyloxy-phényl)-s-triazine ;
2,6-bis-(2,4-diméthylphényl)-4-(2,4-dihydroxyphényl)-s-triazine ;
2,4-bis-(2,4-dihydroxyphényl)-6(4-chlorophényl)-s-triazine ;
2,4-bis-[2-hydroxy-4-(2-hydroxyéthoxy)phényl]-6-(4-chlorophényl)-s-triazine ;
2,4-bis[2-hydroxy-4-(2-hydroxy-4-(2-hydroxyéthoxy)-phényl]-6-(2,4-diméthylphényl)-s-triazine ;
2,4-bis-[2-hydroxy-4-(2-hydroxyéthoxy)phényl]-6-(4-bromophényl)-s-triazine ;
2,4-bis-[2-hydroxy-4-(2-acétoxyéthoxy)-phényl]-6-(4-chlorophényl)-s-triazine ;
2,4-bis-(2,4-dihydroxyphényl)-6-(2,4-diméthylphényl)-s-triazine ; ou
2-hydroxy-4-dodécyloxybenzophénone ; ou
2-hydroxy-4-octyloxy-benzophénone.

12. Composition selon la revendication 11, où la quantité efficace de la combinaison de stabilisants de la présente invention est de 10 à 50 % en poids, par rapport au pigment ; où la quantité efficace d'amine encombrée est de 1 à 49 % en poids, par rapport au pigment ; et où la quantité efficace de l'absorbeur UV est de 1 à 49 % en poids, par rapport au pigment.

13. Procédé pour la préparation de composition de pigment stabilisée selon la revendication 11, comprenant :
un cobroyage d'un pigment organique ou inorganique avec de 10 à 50 % en poids, par rapport au pigment, du mélange de stabilisants où ledit mélange est de 1 à 49 % en poids par rapport au pigment, d'une amine encombrée ; et de 1 à 49 % en poids, par rapport au pigment, d'un absorbeur UV, lequel est choisi parmi les composés suivants :
2-[2-hydroxy-5'-méthylphényl]-2H-benzotriazole;
2-[2-hydroxy-3',5'-di-tert-butylphényl]-2H-benzotriazole ;
2-[2-hydroxy-5'-tert-butylphényl]-2H-benzotriazole ;
2-[2-hydroxy-5'-(1,1,3,3-tétraméthylbutyl)phényl]-2H-benzotriazole ;
2-[2-hydroxy-5-chloro-3',5'-di-tert-butylphényl]-2H-benzotriazole ;
2-[2-hydroxy-5-chloro-3'-tert-butyl-5'-méthylphényl]-2H-benzotriazole ;
2-[2-hydroxy-3'-sec-butyl-5'-tert-butylphényl]-2H-benzotriazole ;
2-[2-hydroxy-4'-octoxyphényl]-2H-benzotriazole;
2-[2-hydroxy-3',5'-di-tert-amylphényl]-2H-benzotriazole ;
2-[2-hydroxy-3'-tert-butyl-5'-(2-(oméga-hydroxy-octa-(éthylèneoxy)-carbonyl-éthyl)-phényl]-2H-benzotriazole ;
2-[2-hydroxy-3'-dodécyl-5'-méthylphényl]-2H-benzotriazole ;
2-[2-hydroxy-3'-tert-butyl-5'-(2-octyloxycarbonyl)-éthylphényl]-2H-benzotriazole ;
2-[2-hydroxy-3'-dodécyl-5'-méthylphényl]-2H-benzotriazole ;
2-(2-hydroxy-3-tert-butyl-5-[2-(méthoxycarbonyl)-éthyl]phényl}-2H-benzotriazole ;
2-[2-hydroxy-3,5-di-(α,α-diméthylbenzyl)phényl]-2H-benzotriazole ;
2-(2-hydroxy-3-α-cumyl-5-tert-octylphényl)-2H-benzotriazole ;
5-benzènesulfonyl-2-(2-hydroxy-3,5-di-tert-butylphényl)-2H-benzotriazole ;
2,4-diphényl-6-(2-hydroxy-4-hexyloxyphényl)-s-triazine ;
2,4-bis-(2,4-diméthylphényl)-6-(2-hydroxy-4-octyloxy-phényl)-s-triazine ;
2,6-bis-(2,4-diméthylphényl)-4-(2,4-dihydroxyphényl)-s-triazine ;
2,4-bis-(2,4-dihydroxyphényl)-6-(4-chlorophényl)-s-triazine ;
2,4-bis-[2-hydroxy-4-(2-hydroxyéthoxy)phényl]-6-(4-chlorophényl)-s-triazine ;
2,4-bis[2-hydroxy-4-(2-hydroxy-4-(2-hydroxyéthoxy)-phényl]-6-(2,4-diméthylphényl)-s-triazine ;
2,4-bis-[2-hydroxy-4-(2-hydroxyéthoxy)phényl]-6-(4-bromophényl)-s-triazine ;
2,4-bis-[2-hydroxy-4-(2-acétoxyéthoxy)-phényl]-6-(4-chlorophényl)-s-triazine ;
2,4-bis-(2,4-dihydroxyphényl)-6-(2,4-diméthylphényl)-s-triazine ; ou
2-hydroxy-4-dodécyloxybenzophénone ; ou
2-hydroxy-4-octyloxybenzophénone.
